# EUROPÄISCHE PATENTSCHRIFT

(11) **EP 3 173 263 B1**
(45) Veröffentlichungstag und Bekanntmachung des Hinweises auf die Patenterteilung: **20.10.2021**
(21) Anmeldenummer: 16197735.0
(22) Anmeldetag: 08.11.2016
(51) Int. Cl.: B60D 1/06, B60D 1/62

(54) **ANHÄNGEKUPPLUNG**
TRAILER COUPLING
ATTELAGE

(30) Priorität: 24.11.2015 DE 102015120327
(43) Veröffentlichungstag der Anmeldung: 31.05.2017
(73) Patentinhaber: ACPS Automotive GmbH, 74379 Ingersheim (DE)
(72) Erfinder: Kadnikov, Aleksej, 71229 Leonberg (DE); Gentner, Wolfgang, 71711 Steinheim (DE); Rimmelspacher, Bernhard, 76287 Rheinstetten (DE)
(74) Vertreter: Hoeger, Stellrecht & Partner Patentanwälte mbB

(56) Entgegenhaltungen:
- EP-A1- 2 719 555
- DE-A1-102010 045 519
- DE-A1-102012 001 921
- DE-A1-102012 002 335

## Beschreibung

Die Erfindung betrifft eine Anhängekupplung für Kraftfahrzeuge, umfassend eine an einem Heckbereich des Kraftfahrzeugs angeordnete Trägereinheit, einen Kugelhals, der an einem ersten Ende eine Kupplungskugel trägt und der mit einem zweiten Ende an der Trägereinheit gehalten ist, eine um eine Mittelachse der Kupplungskugel umlaufende Nut, in der ein Mitnahmering drehbar um die Mittelachse geführt ist, und eine in der Kupplungskugel angeordnete Drehposition des Mitnahmerings erfassende Sensoreinheit.

Derartige Anhängekupplungen sind aus der DE 10 2012 001 921 A1 und aus der EP2719555 A1 bekannt.

Bei diesen ist üblicherweise der Mitnahmering aus Kunststoff ausgebildet und nicht nur drehbar sondern auch in einer Ebene senkrecht zur Mittelachse bewegbar.

Der Erfindung liegt daher die Aufgabe zugrunde, eine Anhängekupplung der gattungsgemäßen Art derart zu verbessern, dass der Mitnahmering möglichst präzise geführt und möglichst verschleißfest ausgebildet ist.

Diese Aufgabe wird bei einer Anhängekupplung der eingangs beschriebenen Art durch die Merkmale des Anspruchs 1 gelöst.

Um die Drehstellungen des Mitnahmerings relativ zur Kupplungskugel erfassen zu können, sieht die erfindungsgemäße Lösung vor, dass der Mitnahmering mit einer Abtaststruktur versehen ist, die von einer im Kugelkörper angeordneten Sensoreinheit abtastbar ist, wobei die Abtaststruktur an dem Trägerkörper angeordnet ist.

Die Abtaststruktur ist dabei erfindungsgemäß so ausgebildet, dass diese aufeinanderfolgende Bereiche aufweist, die ein Magnetfeld unterschiedlich stark beeinflussen.

Erfindungsgemäß lassen sich derartige, ein Magnetfeld unterschiedlich stark beeinflussende Bereiche dadurch realisieren, dass diese Bereiche unterschiedlich stark magnetisierbar sind.

Die erfindungsgemäße Abtaststruktur sieht vor, dass die Abtaststruktur als alternierende, beispielsweise in der Umlaufrichtung periodische, Struktur ausgebildet ist, die um die Mittelachse in Umlaufrichtung aufeinanderfolgende Materialstege und Materialsteglücken aufweist, so dass einerseits die Materialstege und andererseits die Materialsteglücken von der Sensoreinheit detektiert werden können.

Insbesondere dann, wenn es darum geht, ein Magnetfeld unterschiedlich stark zu beeinflussen, sind derartige Materialstege und Materialsteglücken einfache diese Erfordernisse erfüllende Lösungen.

Eine besonders einfache Möglichkeit der Realisierung von Materialstegen und Materialsteglücken zieht vor, dass die Abtaststruktur um die Mittelachse umlaufend aufeinanderfolgende Stege und Aussparungen aufweist, so dass beispielsweise die Stege und die Aussparungen dadurch beispielsweise durch eine in Umlaufrichtung sich erstreckende Lochreihe mit zwischen den einzelnen Löchern gebildeten Stegen realisiert werden kann.

Eine vorteilhafte Lösung sieht vor, dass der Mitnahmering einen Trägerkörper aus Metall aufweist und dass an dem Trägerkörper Mitnahmeelemente gehalten sind, die über eine durch die Kupplungskugeloberfläche definierte geometrische Kugelfläche radial zur Mittelachse nach außen überstehen.

Der Vorteil der erfindungsgemäßen Lösung ist dahin zu sehen, dass durch die Ausbildung des Trägerkörpers des Mitnahmerings aus Metall sich der Mitnahmering präziser führen und stabiler ausbilden lässt.

Besonders vorteilhaft ist es dabei, wenn die Mitnahmeelemente radial zur Mittelachse elastisch bewegbare Mitnahmeflächen aufweisen, welche dann in der Lage sind, eine kraftschlüssige und/oder formschlüssige Verbindung mit einem an der Kupplungskugel angreifenden Element, beispielsweise einer Zugkugelkupplung, herzustellen.

Dabei können entweder die Mitnahmeelemente selbst in radialer Richtung zur Mittelachse volumendeformierbar sein oder die Mitnahmeelemente sind selbst im Wesentlichen volumeninvariant elastisch deformierbar und/oder relativ zum Trägerkörper und/oder radial zur Mittelachse elastisch bewegbar.

Eine besonders günstige Lösung sieht vor, dass die Mitnahmeelemente ausgehend von dem Trägerkörper sich mit einer in radialer Richtung zur Mittelachse verlaufenden Komponente erstrecken und somit insbesondere selbst radial zur Mittelachse relativ zum Trägerkörper bewegbar sind.

Eine besonders vorteilhafte Lösung sieht vor, dass die Mitnahmeelemente Zungen umfassen und dass die Zungen einen mit dem Trägerkörper verbundenen Zungenansatz und ein insbesondere freies, d.h. nicht am Trägerkörper fixiertes, Zungenende aufweisen, zu welchem sich die Zungen ausgehend von dem Zungenansatz erstrecken.

Derartige Zungen sind vorzugsweise aus Flachmaterial oder als Flachmaterial hergestellt.

Durch das Vorsehen von Zungen ist eine federelastische Bewegbarkeit der Mitnahmeelemente relativ zum Trägerkörper in einfacher Weise realisierbar.

Ferner ist vorzugsweise vorgesehen, dass die Zungen so gebogen sind, dass das Zungenende in der Nut liegt, um zu verhindern, dass sich das Zungenende an einem an der Kupplungskugel angreifenden Element, beispielsweise der Zugkugelkupplung, verhakt und beim Abnehmen des Elements beschädigt wird.

Ferner ist es auch vorteilhaft, wenn der Zungenansatz der Zungen in der Nut liegt, da dann die Zungen mit ihren außerhalb der Nut liegenden Bereichen einerseits eine ausreichende Federelastizität haben und andererseits der Trägerkörper in der Nut geschützt angeordnet ist.

Eine vorteilhafte Lösung sieht dabei vor, dass die Zungen C-förmig gebogen sind, wobei die C-förmige Biegung vorzugsweise in einer durch die Mittelachse hindurchlaufenden Radialebene liegt.

Als besonders vorteilhaft hat es sich erwiesen, wenn die Zungen einen radial zur Mittelachse konvex nach außen gewölbten Mitnahmebereich aufweisen, der über die geometrische Kugelfläche übersteht.

Mit diesem Mitnahmebereich ist somit in einfacher Weise ein Kontakt mit dem an der Kupplungskugel angreifenden Element realisierbar, der zu einer kraftschlüssigen und/oder formschlüssigen Mitnahme des Mitnahmerings mit dem an der Kupplungskugel eingreifenden Element führt.

Insbesondere ist dabei vorgesehen, dass der konvex gewölbte Mitnahmebereich zumindest teilweise radial zur Mittelachse nach außen über die Nut übersteht.

Ferner sieht eine besonders stabile und robuste Lösung vor, dass die Mitnahmeelemente aus Metall ausgebildet sind.

Insbesondere sind die Mitnahmeelemente aus demselben Material wie der Trägerkörper hergestellt.

Somit weisen die Mitnahmeelemente einerseits eine hohe Verschleißfestigkeit auf und lassen sich andererseits in einfacher Weise als federelastische, insbesondere eine ausreichend große Federkraft aufweisende Elemente ausbilden, mit denen sich eine dauerhafte kraftschlüssige und/oder formschlüssige Verbindung zu einem an der Kupplungskugel angreifenden Element, beispielsweise einer Zugkugelkupplung, herstellen lässt.

Da aus Metall ausgebildete Mitnahmeelemente an einer Innenkontur eines an der Kupplungskugel angreifenden Elements Verschleißspuren erzeugen können, sieht eine weitere vorteilhafte Lösung vor, dass die aus Metall ausgebildeten Mitnahmeelemente mit Elastomerauflagen versehen sind, welche an der Innenkontur oberflächenschauend und kraftschlussverbessernd zur Anlage kommen.

Noch vorteilhafter ist es wenn auf den Mitnahmeelementen ein Mantel aus Elastomermaterial aufliegt, der insbesondere die Gesamtheit der Mitnahmeelemente ringähnlich umschließt und an diesen anliegt.

Ein derartiger Mantel hat außerdem den Vorteil, dass Mitnahmeelemente zusätzlich zu schützen und auch ein Verhaken der Mitnahmeelemente an der Innenkontur zu verhindern.

Insbesondere lässt ist ein derartiger ringähnlicher Mantel so gestaltet, dass dieser die Nut in der Kupplungskugel nach außen verschließt und somit das Eindringen von Schmutz verhindert.

Hinsichtlich der Ausbildung des Trägerkörpers wurden im Zusammenhang mit den bislang erläuterten Ausführungsformen keine näheren Angaben gemacht.

So sieht eine vorteilhafte Lösung vor, dass der Trägerkörper als um die Mittelachse in einer Umlaufrichtung umlaufender Ringkörper ausgebildet ist.

Dabei könnte der Trägerkörper kein geschlossener Ringkörper, sondern ein an einer Stelle offener Ringkörper sein, so dass dadurch die Montage erleichtert wäre.

Hinsichtlich der Stabilität der Führung des Mitnahmerings hat es sich jedoch als vorteilhaft erwiesen, wenn der Trägerkörper im betriebsfähig montierten Zustand als in einer Umlaufrichtung um die Mittelachse geschlossen umlaufender Ringkörper ausgebildet ist.

Zur Montage eines derartigen Trägerkörpers ist es jedoch zweckmäßig, wenn der Trägerkörper als zwei Ringenden aufweisender, durch einen Verschluss in der Umlaufrichtung schließbarer Ringkörper ausgebildet ist.

Hinsichtlich der Verbindung zwischen den Mitnahmeelementen und dem Trägerkörper wurden bislang keine näheren Angaben gemacht.

Insbesondere lässt sich bei den Mitnahmeelementen die elastische Bewegbarkeit dadurch realisieren, dass die Mitnahmeelemente aus einem elastisch deformierbaren Flachmaterial, insbesondere einem metallischen elastisch deformierbaren Flachmaterial hergestellt sind.

So sieht eine vorteilhafte Lösung vor, dass die Mitnahmeelemente an den Trägerkörper beispielsweise stoffschlüssig oder formschlüssig angeformt sind.

Dabei könnten die Mitnahmeelemente selbst als aus einem sich von dem Trägerkörper unterscheidenden Material hergestellt sein und beispielsweise mit dem Trägerkörper verbunden sein.

Eine besonders vorteilhafte Lösung sieht vor, dass die Mitnahmeelemente einstückig an den Trägerkörper angeformt sind und somit mit diesem ein zusammenhängendes Teil bilden.

Hinsichtlich der Herstellung des Trägerkörpers wurden bislang keine näheren Angaben gemacht.

So sieht eine besonders vorteilhafte Lösung vor, dass der Trägerkörper aus einem Flachmaterial ausgebildet ist, wobei die Ausbildung des Trägerkörpers insbesondere ein Schneiden oder Stanzen und nachfolgendes Formen des Flachmaterials zum Gegenstand hat.

Besonders günstig ist es dabei, wenn der Trägerkörper aus dem Flachmaterial so geformt ist, dass dieser in einer um die Mittelachse herumverlaufenden Zylinderfläche verläuft und somit sich präzise an der Kupplungskugel oder einem Kugelkörper der Kupplungskugel führen lässt.

Da der Trägerkörper selbst aus Metall hergestellt sein soll und der Kugelkörper ebenfalls aus Metall hergestellt ist, lässt sich die Führung des Trägerkörpers an dem Kugelkörper der Kupplungskugel dann optimal gestalten, wenn der Trägerkörper an einer Trägerkörperführung geführt ist, die ihrerseits in der Nut des Kugelkörpers angeordnet ist.

Eine derartige Trägerkörperführung lässt sich insbesondere als Kunststoffelement ausbilden, so dass dadurch der aus Metall hergestellte Trägerkörper nicht unmittelbar an dem Kugelkörper aus Metall geführt werden muss und somit - ohne dass eine aufwändige Bearbeitung der Metalloberflächen erforderlich ist - in einfacher Weise eine leichte Drehbarkeit des Trägerkörpers relativ zum Kugelkörper dauerhaft realisierbar ist.

Insbesondere ist es dabei vorteilhaft, wenn die Trägerkörperführung den Trägerkörper berührungsfrei zum Kugelkörper führt.

Dabei ist es besonders günstig, wenn die Trägerkörperführung den Trägerkörper berührungsfrei zu Wandflächen der Nut führt, so dass letztlich die Bewegbarkeit des Trägerkörpers relativ zum Kugelkörper durch die Trägerkörperführung vorgegeben und definiert werden kann.

Eine besonders günstige Lösung sieht dabei vor, dass die Trägerkörperführung eine Aufnahme für den Trägerkörper aufweist, so dass der Trägerkörper beispielsweise in einer oder mehreren Nuten der Trägerkörperaufnahme geführt werden kann.

Dabei ist insbesondere die Trägerkörperaufnahme aus einem Kunststoffmaterial, vorzugsweise einem verschleißfesten Kunststoffmaterial, hergestellt.

Ferner ist vorzugsweise die Trägerkörperaufnahme als zweigeteiltes Element ausgebildet, welches sich somit in einfacher Weise in die Nut im Kugelkörper einsetzen lässt.

Eine besonders vorteilhafte Lösung sieht vor, dass die Sensoreinheit zur Abtastung der Drehstellungen des Mitnahmerings eine magnetisch vorgespannte Sensoranordnung, bei welcher insbesondere mindestens ein Sensor von einem zur magnetischen Vorspannung dienenden Magnetfeld durchflutet ist, aufweist, mit welcher die Drehstellungen einer Abtaststruktur des Mitnahmerings erfasst werden, die in definierten Abständen aufeinanderfolgend angeordnete erste und zweite Bereiche aufweist, wobei die ersten und zweiten Bereiche bei Wechselwirkung mit dem Magnetfeld der Sensoreinheit dieses Magnetfeld unterschiedlich stark beeinflussen.

Dabei ist vorzugsweise vorgesehen, dass die ersten und zweiten Bereiche der Abtaststruktur an dem Trägerkörper ausgebildet sind.

Insbesondere ist dabei vorgesehen, dass die ersten und zweiten Bereiche der Abtaststruktur einstückig an den Trägerkörper angeformt sind.

Hinsichtlich der relativen Anordnung zwischen der Sensoreinheit und der Abtaststruktur wurden im Zusammenhang mit den bisherigen Ausführungen keine näheren Angaben gemacht.

So sieht eine vorteilhafte Lösung vor, dass die Sensoreinheit bezogen auf die Mittelachse radial innerhalb der Abtaststruktur in dem Kugelkörper angeordnet ist.

Hinsichtlich einer raumsparenden Bauweise hat es sich dabei als besonders zweckmäßig erwiesen, wenn die Sensoreinheit eine mit einer Komponente radial zur Mittelachse verlaufende und auf die Abtaststruktur gerichtete Detektionsrichtung aufweist, so dass sich die Sensoreinheit vorzugsweise einfach in die Kupplungskugel integrieren lässt.

Hinsichtlich der Anordnung der Sensoreinheit wurden bislang keine näheren Angaben gemacht.

Eine besonders vorteilhafte Lösung sieht vor, dass in dem Kugelkörper eine radial innerhalb der Nut angeordnete Ausnehmung für die Sensoreinheit vorgesehen ist.

Dabei ist es besonders vorteilhaft, wenn die Ausnehmung in Richtung parallel zu der Mittelachse der Kupplungskugel maximal dieselbe Ausdehnung aufweist wie die Nut oder eine geringere Ausdehnung.

Ferner ist vorzugsweise vorgesehen, dass die Ausnehmung sich in dem Kugelkörper quer zur Mittelachse erstreckt.

Besonders einfach lässt sich die Ausnehmung dann realisieren, wenn die Ausnehmung im Anschluss an die Nut in den Kugelkörper eindringt.

Um die Sensoreinheit vorteilhaft mit einer elektrischen Leitung verbinden zu können, ist vorzugsweise vorgesehen, dass die Ausnehmung in einen die Kupplungskugel durchsetzenden Leitungskanal übergeht.

Vorzugsweise ist dabei der Leitungskanal so ausgebildet, dass er einen innerhalb des Kugelkörpers ungefähr parallel zur Mittelachse verlaufenden Kanalabschnitt aufweist.

Unter einem ungefähr parallelen Verlauf des Kanalabschnitts ist dabei zu verstehen, dass die Mittelachse des Kugelabschnitts mit der Mittelachse der Kupplungskugel einen Winkel von weniger als 15° einschließt.

Hinsichtlich des Verlaufs des Leitungskanals wurden bislang ebenfalls keine näheren Angaben gemacht. So sieht eine besonders vorteilhafte Lösung vor, dass der Leitungskanal zumindest einen Teil der Kupplungskugel, einen Kugelansatz und einen Teilbereich des Kugelhalses durchsetzt.

Ferner ist zweckmäßigerweise vorgesehen, dass der Leitungskanal im Bereich des Kugelhalses eine Zugangsöffnung aufweist.

Hinsichtlich der Ausbildung der Kupplungskugel wurden bislang keine näheren Angaben gemacht.

Zum Vorsehen der Nut und der Ausnehmung für die Sensoreinheit ist es vorteilhaft, die Kupplungskugel als geteilte Kugel auszuführen, wobei beispielsweise eine Teilung durch eine parallel zu einer Äquatorebene verlaufende Teilungsebene erfolgt.

Andererseits ist es für die Stabilität der Kupplungskugel von Vorteil, wenn die Kupplungskugel einstückig ausgebildet ist und somit der Aufwand der Verbindung zweier Teile der Kupplungskugel entfallen kann.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine Ansicht eines Kraftfahrzeugs mit einer erfindungsgemäßen Anhängekupplung von hinten;
- Fig. 2: eine Seitenansicht des Kraftfahrzeugs in Richtung des Pfeils A in Fig. 1 mit teilweise im Bereich der Anhängekupplung weg geschnittener Karosserie;
- Fig. 3: eine Ansicht in Richtung des Pfeils B in Fig. 1;
- Fig. 4: eine Seitenansicht ähnlich Fig. 2 mit einem an der Anhängekupplung montierten Lastenträger;
- Fig. 5: eine Seitenansicht ähnlich Fig. 2 mit einem an der Anhängekupplung angehängten Anhängers;
- Fig. 6: eine vergrößerte perspektivische Darstellung der Kupplungskugel in der Seitenansicht bei einem ersten Ausführungsbeispiel einer erfindungsgemäßen Anhängekupplung;
- Fig. 7: eine Ansicht des ersten Ausführungsbeispiels in Richtung des Pfeils C in Fig. 6;
- Fig. 8: eine Explosionsdarstellung des ersten Ausführungsbeispiels;
- Fig. 9: einen Schnitt längs Linie 9-9 in Fig. 7;
- Fig. 10: eine vergrößerte Darstellung des Bereichs D in Fig. 9;
- Fig. 11: einen Schnitt längs Linie 11-11 in Fig. 9;
- Fig. 12: eine perspektivische Darstellung eines Mitnahmerings gemäß dem ersten Ausführungsbeispiel;
- Fig. 13: eine Darstellung ähnlich Fig. 7 eines zweiten Ausführungsbeispiels einer erfindungsgemäßen Anhängekupplung;
- Fig. 14: einen Schnitt längs Linie 14-14 in Fig. 13;
- Fig. 15: eine vergrößerte Darstellung des Bereichs E in Fig. 14;
- Fig. 16: einen Schnitt längs Linie 16-16 in Fig. 14;
- Fig. 17: eine perspektivische Darstellung eines Mitnahmerings gemäß dem zweiten Ausführungsbeispiel;
- Fig. 18: eine perspektivische Darstellung eines Mitnahmerings gemäß einem dritten Ausführungsbeispiel einer erfindungsgemäßen Anhängekupplung;
- Fig. 19: eine vergrößerte Darstellung eines Schnitts längs Linie 19-19 in Fig. 18;
- Fig. 20: eine perspektivische Darstellung eines Mitnahmerings eines vierten Ausführungsbeispiels einer erfindungsgemäßen Anhängekupplung;
- Fig. 21: eine Draufsicht auf den Mitnahmering gemäß Fig. 20;
- Fig. 22: eine vergrößerte Darstellung eines Schnitts längs Linie 22-22 in Fig. 18 mit angedeuteter Lage des Mitnahmerings in der Nut der Kupplungskugel und
- Fig. 23: einen Schnitt ähnlich Fig. 9 durch ein fünftes Ausführungsbeispiel einer erfindungsgemäßen Anhängekupplung.

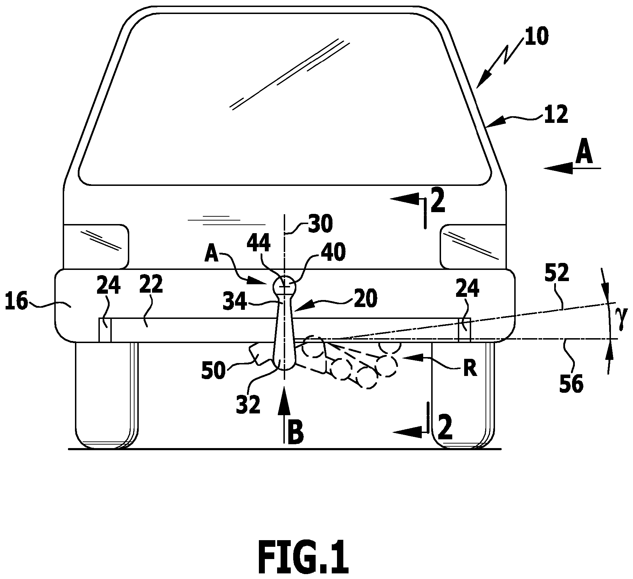

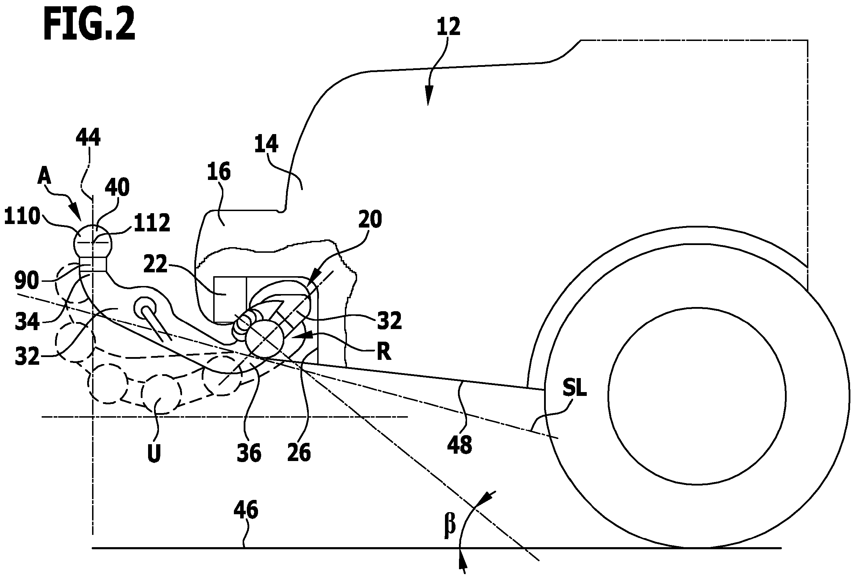

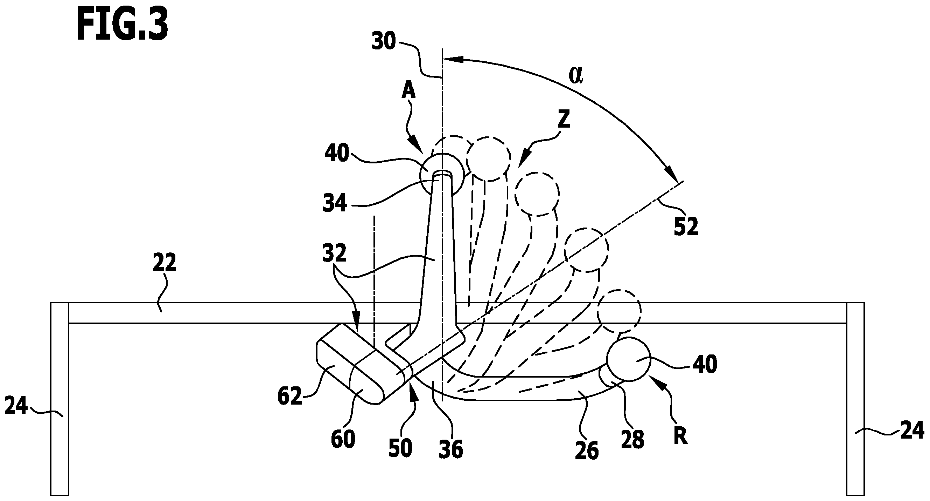

Ein in Fig. 1, 2 und 3 als Ganzes mit 10 bezeichnetes Kraftfahrzeug mit einer Kraftfahrzeugkarosserie 12 ist an einem Heckbereich 14 der Kraftfahrzeugkarosserie im Bereich einer hinteren Stoßfängereinheit 16 der Kraftfahrzeugkarosserie 12 mit einer Anhängekupplung 20 versehen.

Die Anhängekupplung 20 umfasst dabei einen Querträger 22, welcher über seitliche Längsträger 24 mit der Kraftfahrzeugkarosserie 12 verbunden ist, wobei sich die Längsträger 24 ungefähr parallel zu einer Längsmittelebene 30 der Kraftfahrzeugkarosserie 12 erstrecken, während der Querträger 22 sich quer zur Längsmittelebene 30 der Kraftfahrzeugkarosserie 12 und parallel zu einem heckseitigen Ende 26 derselben erstreckt.

Die Anhängekupplung 20 umfasst ferner einen als Ganzes mit 32 bezeichneten Kugelhals, welcher an einem ersten Ende 34 eine mit 40 bezeichnete Kupplungskugel trägt, während ein zweites Ende 36 des Kugelhalses 32 beispielsweise mittels einer als Ganzes mit 50 bezeichneten Schwenklagereinheit an dem Querträger 22 bewegbar gelagert ist, so dass der Kugelhals 32 zwischen einer Arbeitsstellung A und einer Ruhestellung R bewegbar ist.

Dabei ist der Kugelhals 32 mit der Kupplungskugel 40 in der Arbeitsstellung A zumindest im Bereich seines ersten Endes 34 symmetrisch zur Längsmittelebene 30 angeordnet und auch die Kupplungskugel 40 ist mit ihrer Mittelachse 44 in der Längsmittelebene 30 positioniert, so dass an die Kupplungskugel 40 ein Anhänger angehängt werden kann.

Insbesondere stellt die Längsmittelebene 30 auch gleichzeitig die Längsmittelebene 30 der Anhängekupplung 20 dar.

Ferner ist der Kugelhals 32 mit der von diesem getragenen Kupplungskugel 40 beispielsweise durch die Schwenklagereinheit 50 in die Ruhestellung R verschwenkbar, in welcher der Kugelhals 32 zwischen dem Querträger 22 und dem heckseitigen Ende 26 der Kraftfahrzeugkarosserie 12 liegt, insbesondere auf einer einer Fahrbahn 46 abgewandten Seite einer die Stoßfängereinheit 16 berührenden und in einem Winkel von 15° zur Fahrbahn 46 verlaufenden Sichtlinie SL und vorzugsweise oberhalb einer von der Kraftfahrzeugkarosserie 12 und der Unterkante der Stoßfängereinheit 16 definierten und der Fahrbahn 46 zugewandten Unterbodenfläche 48.

Dabei bilden der Querträger 22 mit dem Längsträger 24, die Schwenklagereinheit 50 und der Kugelhals 32 zusammen einen Kupplungskugelträger 52 für die Kupplungskugel 40, der alternativ zu der beschriebenen Lösung auch so ausgebildet sein kann, dass der Kugelhals lösbar und abnehmbar oder auch starr mit dem Heckbereich 14 der Fahrzeugkarosserie 12 verbunden ist.

Grundsätzlich kann die Schwenklagereinheit 50 so ausgebildet sein, dass der Kugelhals 26 um mehrere Schwenkachsen verschwenkbar ist, um diesen von der Arbeitsstellung A in die Ruhestellung R zu bewegen.

Bei dem in Fig. 1 bis 3 dargestellten vorteilhaften Ausführungsbeispiel, ist die Schwenklagereinheit 50 beispielsweise so ausgebildet, dass diese ein Verschwenken des Kugelhalses 26 um eine einzige Schwenkachse 54 vorsieht, welche schräg zum Querträger 22 und schräg zur Längsmittelebene 30 verläuft, vorzugsweise in der in Fig. 1 dargestellten Projektion auf eine horizontale Ebene einen Winkel α mit der Längsmittelebene 30 einschließt, der im Bereich zwischen 50 und 80 Grad liegt.

Ferner schließt die Schwenkachse 54 bei einer Projektion auf eine vertikale rechtwinklig zur Fahrzeuglängsmittelebene 30 verlaufende Ebene mit der horizontalen Ebene 56 einen Winkel γ ein, der zwischen 0 und 30 Grad liegt.

Zur Fixierung des Kugelhalses 26 in der Arbeitsstellung A und der Ruhestellung R ist die Schwenklagereinheit 50 mit einer als Ganzes mit 60 bezeichnete Verriegelungsvorrichtung vorgesehen, die nach verschiedensten Prinzipien arbeiten kann, jedoch stets in der Lage ist, den Kugelhals 32 in der Arbeitsstellung A und der Ruhestellung R unbeweglich relativ zur Schwenklagereinheit 50 und somit auch zum Querträger 22 und somit insgesamt zur Kraftfahrzeugkarosserie 12 festzulegen.

Ferner ist die Schwenklagereinheit 50 gegebenenfalls noch mit einer Antriebseinheit 62 versehen, mit welcher ein Betätigen der Verriegelungsvorrichtung und/oder motorischer Antrieb der Schwenkbewegung um die Schwenkachse 54 realisierbar ist.

Alternativ zum Vorsehen der Antriebseinheit 62 ist es aber auch möglich, nach dem jeweiligem Lösen der Verriegelungsvorrichtung 60 ein manuelles Verschwenken zwischen der Arbeitsstellung A und der Ruhestellung R vorzusehen.

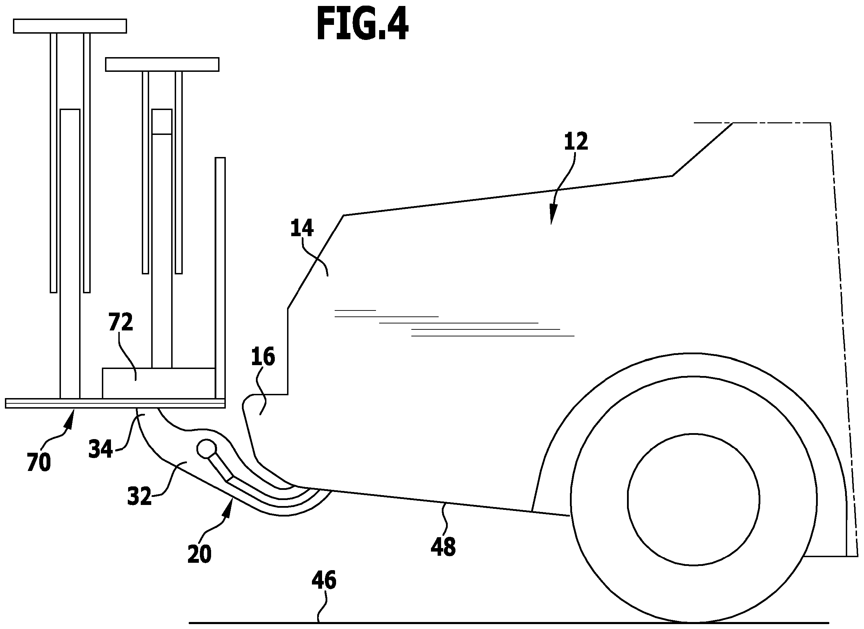

Wie in Fig. 4 dargestellt, dient eine derartige Anhängekupplung 20 beispielsweise dazu, um an der Fahrzeugkarosserie 12 einen Lastenträger 70 zu montieren, der mit einer Kupplung 72 versehen ist, welche einerseits die Kupplungskugel 40 aufnimmt und somit eine formschlüssige Fixierung im Bereich der Kupplungskugel 40 herstellt und andererseits zusätzlich noch entweder im Bereich der Kupplungskugel eine kraftschlüssige Verbindung mit dieser oder im Bereich des Kugelhalses 26 eine formschlüssige und/oder kraftschlüssige Verbindung mit diesem, insbesondere im Bereich des ersten Endes 34, eingeht, um den Lastenträger 70 insgesamt unbeweglich an dem Kugelhals 32 zu fixieren, wobei der Kugelhals 32 den gesamten Lastenträger 70 trägt und sämtliche Kipp-Momente, die vom Lastenträger 70 ausgehen, aufnimmt.

Ein derartiger Lastenträger 70 ist beispielsweise ein üblicher Lastenträger für Fahrräder, welche somit nahe des Heckbereichs 14 der Kraftfahrzeugkarosserie 12 transportiert werden können.

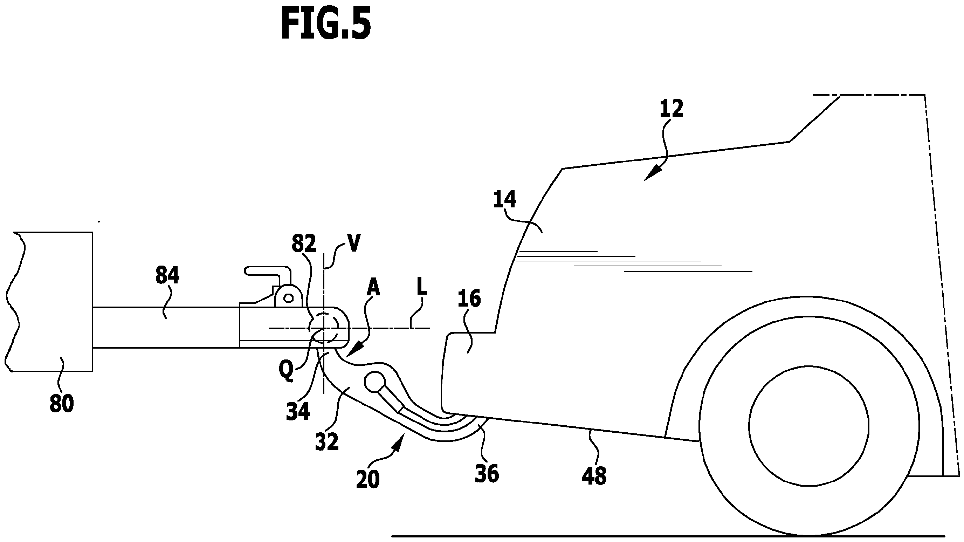

Wie in Fig. 5 dargestellt, dient eine derartige Anhängekupplung 20 aber auch dazu, einen in Fig. 5 schematisch angedeuteten Anhänger 80 zu ziehen, wobei der Anhänger 80 mit einer Zugkugelkupplung 82 an der Kupplungskugel 40 angreift und wobei die Zugkugelkupplung 82 an einem vorderen Ende einer Deichsel 84 des Anhängers 80 angeordnet ist.

Dabei bildet die Zugkugelkupplung 82 mit der Kupplungskugel 40 eine Zugverbindung ähnlich einem Kugelgelenk, so dass die Zugkugelkupplung 82 relativ zur Kupplungskugel 40 in der Arbeitsstellung A sowohl um eine in der Längsmittelebene 30 liegende Längsachse L, eine senkrecht auf der Längsmittelebene 30 stehende Querachse Q, die beide parallel zu einer horizontalen Ebene verlaufen, sowie um eine vertikale Achse V, die in der Längsmittelebene 30 liegt, schwenkbar ist.

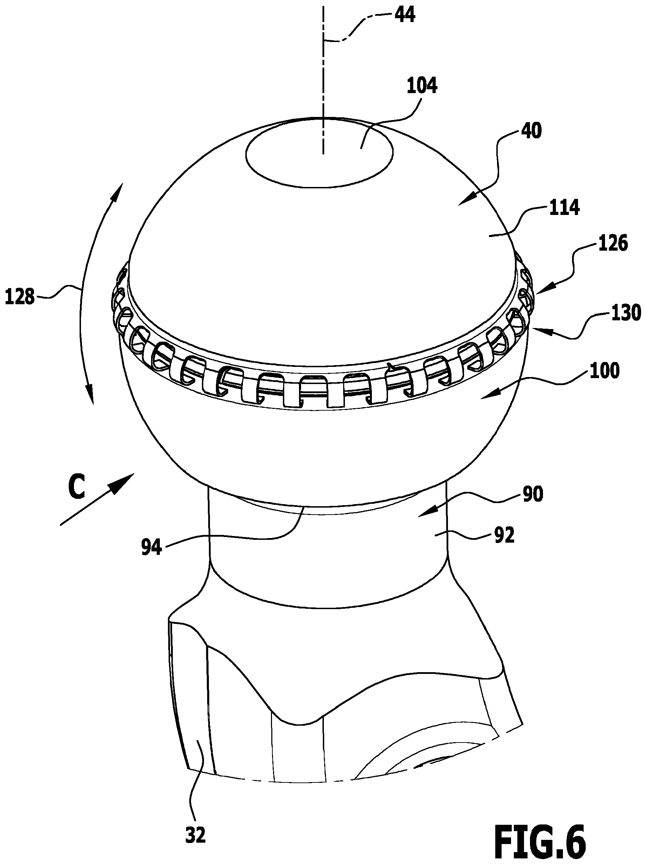

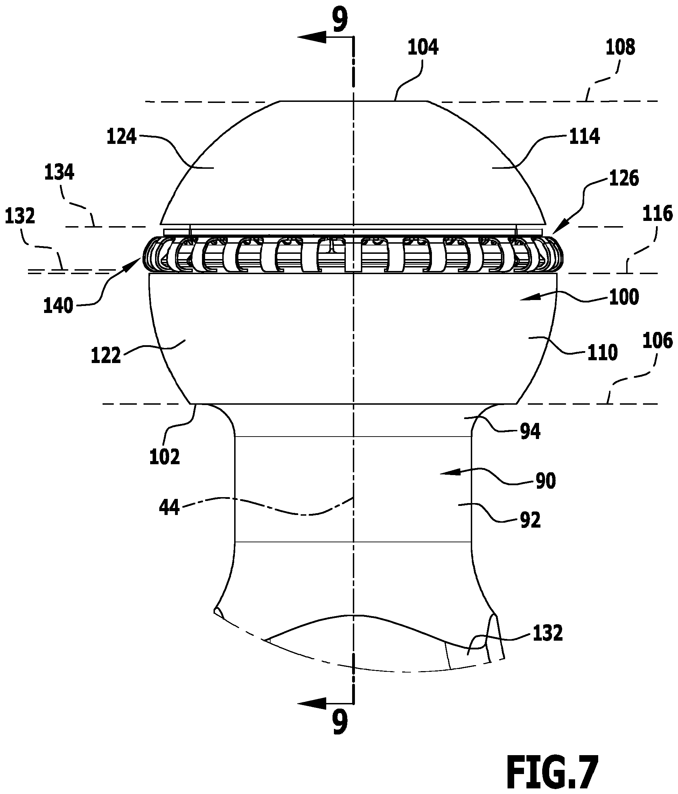

Wie in Fig. 6 und 7 dargestellt, umfasst eine erfindungsgemäße Kupplungskugel 40 einen sich an das erste Ende 34 des Kugelhalses 32 anschließenden Kugelansatz 90, welcher eine zylindrisch zu der Mittelachse 44 der Kupplungskugel 40 verlaufende zylindrische Mantelfläche 92 aufweist, die mit einer Rundung 94 in einen Kugelkörper 100 übergeht, welcher sich ausgehend von einer unteren, senkrecht zur Mittelachse 44 verlaufenden unteren Endfläche 102 bis zu einer oberen Endfläche 104 erstreckt.

Dabei ist die untere Endfläche 102 vorzugsweise eine die Rundung 94 beim Übergang von der zylindrischen Mantelfläche 92 des Kugelansatzes 90 zum Kugelkörper 100 umschließende Ringfläche, welche in einer, senkrecht zur Mittelachse 44 verlaufenden unteren geometrischen Ebene 106 liegt, während die obere Endfläche 104 in einer senkrecht zur Mittelachse 44 verlaufenden oberen geometrischen Ebene 108 liegt, so dass die Ebenen 106 und 108 parallel zueinander verlaufen.

Ferner ist insbesondere der Durchmesser der oberen Endfläche 104 geringer als der Durchmesser der zylindrischen Mantelfläche des Kugelansatzes 90.

Zwischen der unteren Endfläche 102 und der oberen Endfläche 104 weist der Kugelkörper 100 eine Kupplungskugeloberfläche 110 auf, welche einen Kugelflächenabschnitt einer um einen Kugelmittelpunkt 112 verlaufenden geometrischen Kugelfläche 114 darstellt, wobei der Kugelmittelpunkt 112 auf der Mittelachse 44 liegt und die Kupplungskugeloberfläche 110 lediglich den Teil der geometrischen Kugelfläche 114 umfasst, der zwischen der unteren geometrischen Ebene 106 und der oberen geometrischen Ebene 104 liegt.

Ferner weist der Mittelpunkt 112 einen geringeren Abstand von der unteren Ebene 106 auf als von der oberen Ebene 108, so dass eine zu den einander parallelen Ebenen 106 und 108 beispielsweise parallele und senkrecht zur Mittelachse 44 sowie durch den Kugelmittelpunkt 112 verlaufende Äquatorebene 116 die Kupplungskugeloberfläche 110 in eine untere Kugelzone 122 aufteilt, die zwischen der unteren Ebene 106 und der Äquatorebene 116 liegt und eine obere Kugelzone 124, die zwischen der Äquatorebene 116 und der oberen Ebene 108 liegt.

Sowohl die untere Kugelzone 122 als auch die obere Kugelzone 124 verlaufen rotationssymmetrisch um die Mittelachse 44 und stellen somit Bereiche der Kupplungskugeloberfläche 110 dar.

Bei der erfindungsgemäßen Anhängekupplung 20 weist der Kugelkörper 100 eine Sensorzone 126 auf, die vorzugsweise in der oberen Kugelzone 124 liegt zwar nahe der Äquatorebene 116 oder an diese angrenzt.

Vorzugsweise liegt dabei die Sensorzone 126 zwischen einer unteren Begrenzungsebene 132 und einer oberen Begrenzungsebene 134, die ebenfalls senkrecht zur Mittelachse 44 und somit parallel zu der unteren Ebene 106, der oberen Ebene 108 und der Äquatorialebene 116 verlaufen, wobei die untere Begrenzungsebene 132 und die obere Begrenzungsebene 134 der Sensorzone 126 einen Abstand voneinander aufweisen, der im Bereich von 4 mm bis 8 mm liegt.

Vorzugsweise liegt die untere Begrenzungsebene 132 der Sensorzone 126 in einem Abstand von der Äquatorialebene 116, der im Bereich von 0,5 bis 4 mm, vorzugsweise 1 bis 3 mm, liegt.

Die Sensorzone 126 erstreckt sich rotationssymmetrisch um die Mittelachse 44 herum.

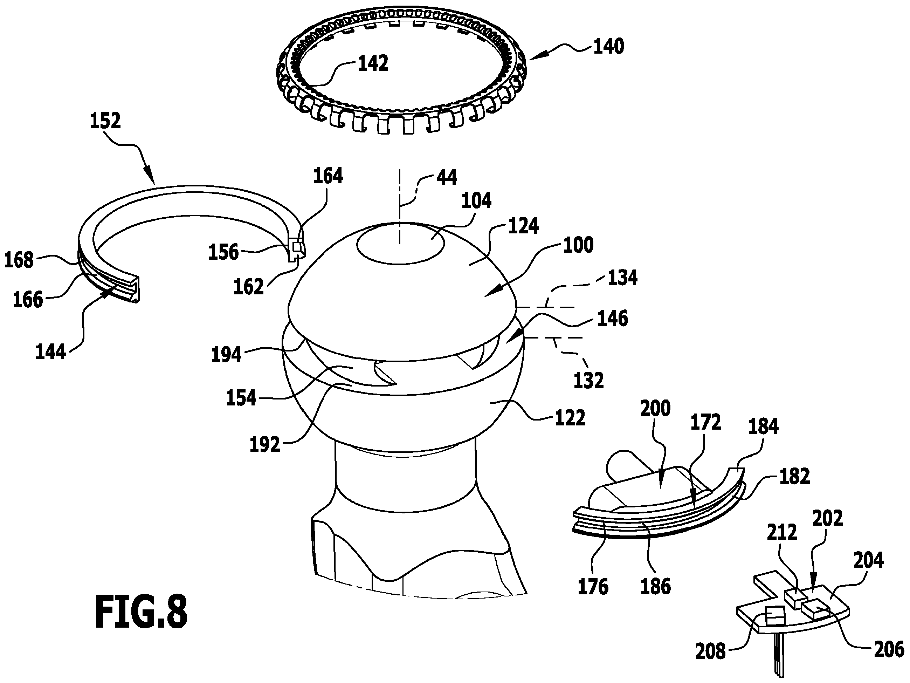

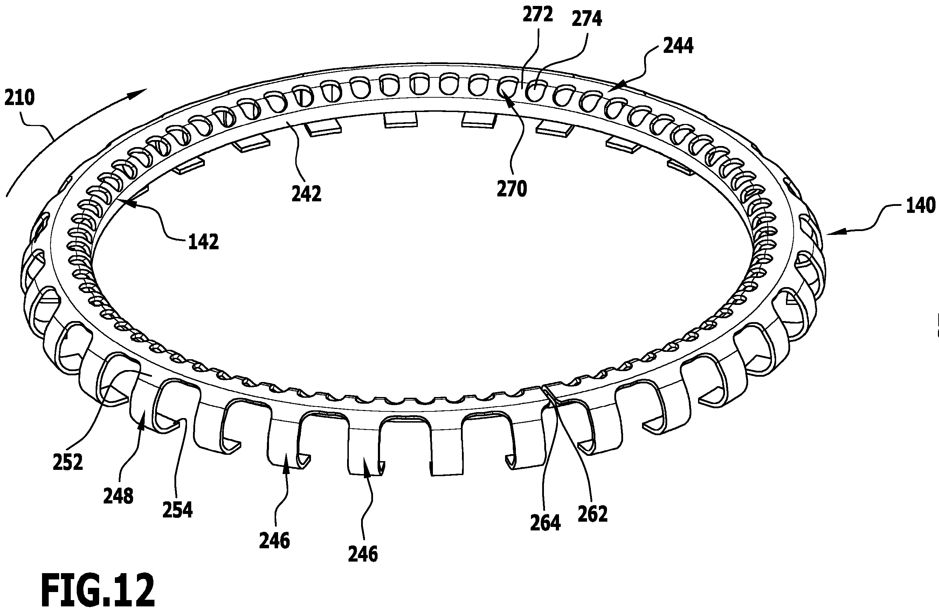

In der Sensorzone 126 ist, wie in Fig. 6 und 7 dargestellt, ein als Ganzes mit 140 bezeichneter Mitnahmering vorgesehen, welcher um die Mittelachse 44 umlaufend in einer an dem Kugelkörper 100 vorgesehenen und um diesen umlaufenden Nut 146 angeordnet ist und, wie in Fig. 8 und 10 bis 12 dargestellt, einen Trägerkörper 142 aufweist, der insbesondere in einer Trägerkörperführung 144 drehbar um die Mittelachse 44 angeordnet ist, wobei die Trägerkörperführung 144 beispielsweise in der im Kugelkörper 100 vorgesehenen Nut 146 angeordnet ist.

Die Nut 146 erstreckt sich vorzugsweise zwischen den Begrenzungsebenen 132 und 134 der Sensorzone 126 und läuft geschlossen um die Mittelachse 44 um.

Beispielsweise umfasst die Trägerkörperführung 144 einen C-förmigen Körper 152 mit einem an einem Nutgrund 154 der Nut 146 anliegenden Innenkörper 156, an welchen beidseitig radial von der Mittelachse 44 weg nach außen überstehende Flanschkörper 162 und 164 angeformt sind, die ihrerseits einen radial außenliegenden Führungsbahnabschnitt 166 für den Trägerkörper 142 des Mitnahmerings 140 bilden.

Der C-förmige Körper 152 ist als offenes Bogensegment ausgebildet, welches durch einen Segmentkörper 172 mit identischem Querschnitt zu einem geschlossenen Ring ergänzt wird, wobei der Segmentkörper 172 ebenfalls einen Innenkörper 176 sowie an diesen angeformte Flanschsegmente 182 und 184 aufweist, die zusammen mit dem Innenkörper 176 ein Führungsbahnsegment 186 bilden, welches den Führungsbahnabschnitt 166 des C-förmigen Körpers zu einer um die Mittelachse 44 umlaufenden Führungsbahn 168 ergänzt, so dass insgesamt der C-förmige Körper 152 zusammen mit dem Segmentkörper 172 die um die Mittelachse 44 umlaufende Trägerkörperführung 144 für den Trägerkörper 142 des Mitnahmerings 140 bilden.

Durch die Bildung der Trägerkörperführung 144 mit der Führungsbahn 168 einerseits aus dem C-förmigen Körper 152 und andererseits aus dem Segmentkörper 172 lassen sich diese auch in einfacher Weise beim Zusammenbau in die Nut 146 des Kugelkörpers 100 einsetzen, wobei jeweils der Innenkörper 156 beziehungsweise 176 derselben an dem Nutgrund 154 anliegt und sich außerdem der jeweilige Innenkörper 156 beziehungsweise 176 zwischen einer in der Begrenzungsebene 132 liegenden Nutwand 192 und einer in der Begrenzungsebene 134 liegenden Nutwand 194 erstreckt und durch diese Nutwände 192 und 194 gegen eine Bewegung in Richtung parallel zur Mittelachse 44 gesichert ist.

An dem Segmentkörper 172 ist vorzugsweise noch eine Sensoraufnahmeeinheit 200, beispielsweise ein Gehäuse, angeordnet, in welcher eine Sensoreinheit 202 angeordnet ist, die beispielsweise eine Schaltungsplatine 204 aufweist, auf welcher mindestens ein Magnetfeldsensor 206 angeordnet ist.

Vorzugsweise sind bei dem dargestellten Ausführungsbeispiel zwei Magnetfeldsensoren 206 und 208, angeordnet, die in einer Umlaufrichtung 210 um die Mittelachse 44 einen Abstand voneinander aufweisen.

Der Magnetfeldsensor 206 oder beide Magnetfeldsensoren 206, 208 sind beispielsweise mittels eines Permanentmagneten 212, der ebenfalls auf der Schaltungsplatine 204 angeordnet ist, von dessen Magnetfeld durchflutet sind, wobei der jeweilige Magnetfeldsensor 206 und 208 erfasst, ob und in welchem Maße sich das diesen durchsetzende Magnetfeld des Permanentmagneten 212 ändert.

Vorzugsweise ist der Permanentmagnet 212 relativ zu den Magnetfeldsensoren 206 und 208 bezogen auf die Mittelachse 44 radial nach innen versetzt angeordnet, so dass das von diesem ausgehende ebenfalls sich mindestens mit einer Komponente in radialer Richtung ausbreitende Magnetfeld den einen Magnetfeldsensor 206 oder die beiden Magnetfeldsensoren 206 und 208 durchfluten kann und eine Detektionsrichtung D vorgibt, die mindestens eine Komponente in radialer Richtung zur Mittelachse 44 aufweist.

Alternativ zum Vorsehen eines einzelnen Permanentmagneten 212 wäre es aber auch denkbar, jedem der Magnetfeldsensoren 206 und 208 einen Permanentmagneten zuzuordnen.

Der Magnetfeldsensor 206 oder die Magnetfeldsensoren 206 und 208 sitzen bezogen auf die Mittelachse 44 radial möglichst weit nach außen versetzt und sind somit möglichst nahe an, vorzugsweise anliegend an dem Innenkörper 176 des Segmentkörpers 172 angeordnet.

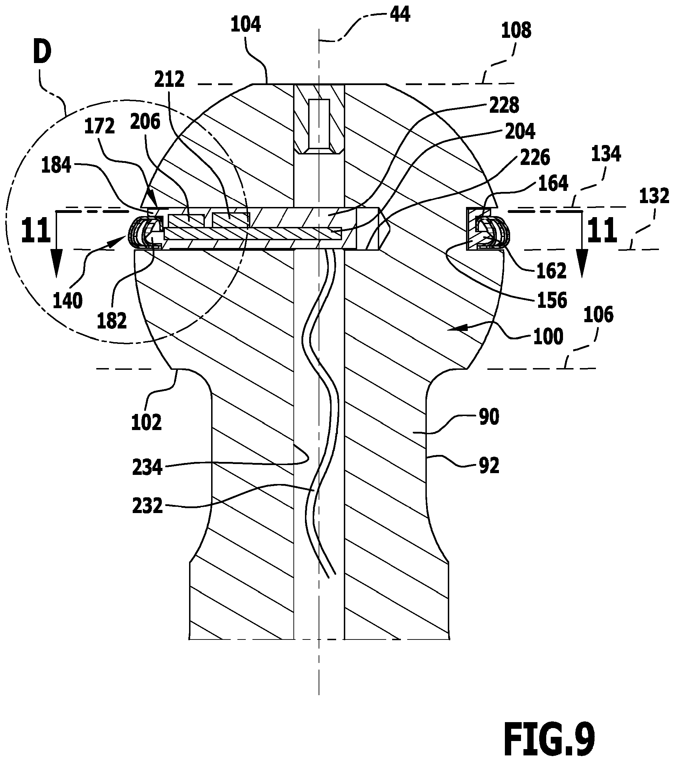

Besonders vorteilhaft ist es, wenn die Sensoraufnahme 200 einstückig an den Segmentkörper 172 angeformt ist, so dass der Magnetfeldsensor 206 oder die Magnetsensoren 206 und 208 auch in möglichst geringem Abstand zu der Führungsnut 186 im Segmentkörper 172 positionieren lassen, wie dies beispielsweise in den Fig. 9, 10 und 11 dargestellt ist.

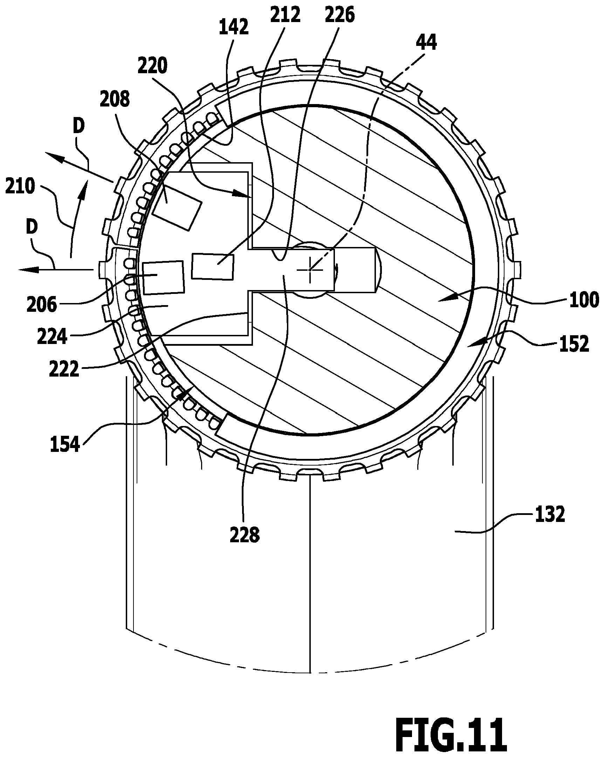

Wie in Fig. 8 und 11 dargestellt, ist der Kugelkörper 100 mit einer sich im Anschluss an die Nut 146 in den Kugelkörper 100 hineinerstreckenden Ausnehmung 220 versehen, in welcher die Sensoraufnahmeeinheit 200 positionierbar ist, wobei die Ausnehmung 220 einen sich an den Nutgrund 154 anschließenden und in den Kugelkörper 100 hineinerstreckenden Außenbereich 222 aufweist, in welchem ein die Magnetfeldsensoren 206 und 208 sowie der den Permanentmagnet 212 aufweisende Teil 224 der Sensoraufnahmeeinheit 200 angeordnet ist, und einen Innenbereich 226 aufweist, in welchem sich ein Fortsatz 228 erstreckt, der die Mittelachse 44 schneidet und in einen als Zentralkanal ausgebildeten Leitungskanal 232 eingreift, welcher sich zumindest im Bereich des Kugelkörpers 100 näherungsweise parallel zur Mittelachse 44 erstreckt.

Unter einem näherungsweise parallelen Verlauf des Leitungskanals 232 zur Mittelachse 40 ist dabei ein Verlauf zu verstehen, bei welchem der Winkel zwischen einer Mittelachse des Leitungskanals 232 und der Mittelachse 44 bis zu 20° betragen kann, vorzugsweise 15° oder weniger, noch besser 10° oder weniger, beträgt.

Dadurch, dass sich der Fortsatz 228 der Sensoraufnahme 200 bis in den Leitungskanal 232 erstreckt, besteht die Möglichkeit, ausgehend von dem Fortsatz 228 eine elektrische Leitung 234 durch den Leitungskanal 232 zu führen, der an einer geeigneten Stelle im Kugelhals 32 eine Austrittsöffnung aufweist, aus welcher die elektrische Leitung 234 dann herausgeführt werden kann.

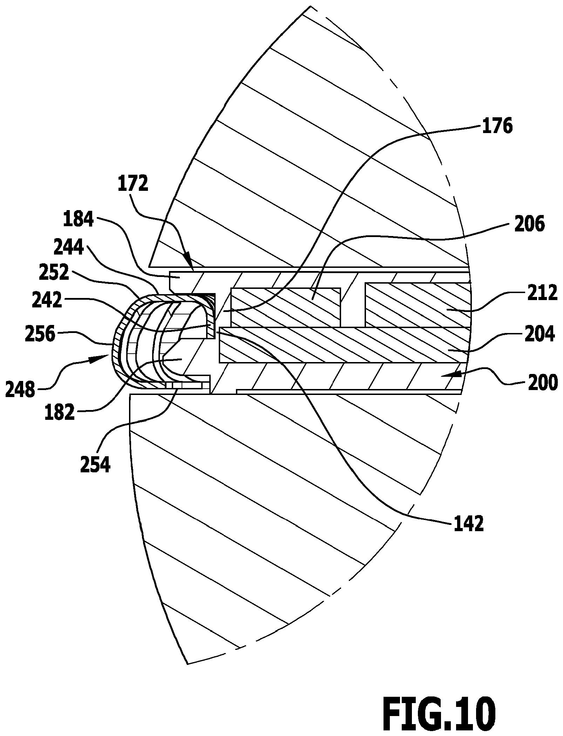

Wie insbesondere in den Fig. 10 bis 12 dargestellt, umfasst der Trägerkörper 142 einen Führungskörper 242, welcher, wie in Fig. 10 dargestellt, an dem jeweiligen Innenkörper 156 beziehungsweise 176 der Trägerkörperführung 144 anliegt und zwischen den angeformten Flanschkörpern 162 und 164 beziehungsweise den Flanschsegmenten 182 und 184 gegen eine Bewegung in Richtung parallel zur Mittelachse 44 geführt ist.

Ausgehend von dem Führungskörper 242 erstreckt sich eine Trägerbasis 244 beispielsweise radial zur Mittelachse 44 nach außen, an welcher in einer Umlaufrichtung um die Mittelachse 44 im Abstand voneinander angeordnete Mitnahmeelemente 246 angeordnet sind, die radial zur Mittelachse 44 federelastisch bewegbar ausgebildet sind, so dass sie mit einer Innenkontur eines an der Kupplungskugel 40 angreifenden Elements, beispielsweise der Zugkugelkupplung 82, eine kraftschlüssige und/oder formschlüssige drehfeste Verbindung eingehen.

Die Mitnahmeelemente 246 sind beispielsweise als sich ausgehend von der Trägerbasis 244 in durch die Mittelachse 44 verlaufenden Radialebenen C-förmig verlaufende Zungen 248, beispielsweise aus Flachmaterial, ausgebildet, die einen mit der Trägerbasis 244 verbundenen Zungenansatz 252 und ein freies Zungenende 254 aufweisen und ausgehend von dem Zungenansatz 252 konvex verlaufen, so dass sich beispielsweise das freie Zungenende 254, wie in Fig. 10 beispielsweise dargestellt, ungefähr parallel zur Trägerbasis 244 erstreckt.

Insbesondere ist der Trägerkörper 142 des Mitnahmerings 140 so ausgebildet, dass dieser sowohl mit dem Führungsschenkel 242 als auch mit der Trägerbasis 244 in der Nut 146 liegt und nicht über die geometrische Kugelfläche 114 übersteht, während die von der Trägerbasis 244 ausgehenden Mitnahmeelemente 246, insbesondere in Form der Zungen 248, mit einem zwischen dem Zungenansatz 252 und dem freien Zungenende 254 liegenden radial zur Mittelachse 44 konvex nach außen gebogenen Mitnahmebereich 256 radial über die geometrische Kugelfläche 114 überstehen, um mit einem an der Kupplungskugel 40 angreifenden Element, insbesondere einer Zugkugelkupplung 82, eine kraftschlüssige und/oder formschlüssige Verbindung herzustellen, so dass das Mitnahmeelement 140 den Drehbewegungen der Zugkugelkupplung 82 relativ zur Kupplungskugel 40 um die Mittelachse 44 folgt und somit in der Lage ist, sich in gleichem Maße wie die Zugkugelkupplung 82 um die Mittelachse 44 drehend zu bewegen.

Um zu verhindern, dass sich die Zungen 248 beim Abnehmen des an der Kupplungskugel 40 angreifenden Elements, beispielsweise der Zugkugelkupplung 82, an dieser verhaken, liegt das freie Zungenende 254 vorzugsweise in der Nut 146 des Kugelkörpers 100 und insbesondere liegt das freie Zungenende 254 dabei, wie in Fig. 10 dargestellt, an den Flanschkörpern 162 des C-förmigen Körpers 152 und dem Flanschsegment 182 des Segmentkörpers 172 an und bewegt sich dabei insbesondere berührungsfrei zur Nutwand 192 um die Mittelachse 44.

Bei dem dargestellten Ausführungsbeispiel des Mitnahmerings 140 sind die Zungen 248 einstückig an den Trägerkörper 142, insbesondere die Trägerbasis 244, angeformt.

Besonders vorteilhaft ist es dabei, wenn sowohl der Trägerkörper 142 als auch die Mitnahmeelemente 246, insbesondere die Zungen 248, aus Metall hergestellt sind, insbesondere einem federelastischen Flachmaterial, welches somit eine radial federnde Bewegung jedes einzelnen Mitnahmeelements 246 und somit auch jede einzelne Zunge 248 relativ zum Trägerkörper 142 ermöglicht, so dass sich die Mitnahmeelemente 246 des Mitnahmerings 140 allen Innenkonturvariationen, beispielsweise der Zugkugelkupplung 82, anpassen können und somit mit dieser entweder eine kraftschlüssige und/oder eine formschlüssige drehfeste Verbindung eingehen können, so dass der Mitnahmering 140 - wie bereits beschrieben - sämtlichen Drehbewegungen der Zugkugelkupplung 82 um die Mittelachse 44 folgt.

Die Ausbildung der Mitnahmeelemente 246 aus Metall hat den Vorteil, dass deren federelastisches Verhalten, insbesondere in radialer Richtung zur Mittelachse 44, durch das Metall geprägt ist, welches beispielsweise im Verhältnis zu Kunststoff eine wesentliche geringere Temperaturabhängigkeit im Bereich von -30°C bis + 100°C zeigt.

Vorzugsweise ist der Trägerkörper 142 des Mitnahmerings 140 im betriebsfähig montierten Zustand als um die Mittelachse 44 umlaufender geschlossener Körper ausgebildet, wobei der geschlossene Körper dadurch entsteht, dass der Trägerkörper 142 aus einem Flachmaterial zu einem ringähnlich gebogenen Körper mit zwei Ringenden 262 und 264 wird und im Bereich der Ringenden 262 und 264 zu einem in einer Umlaufrichtung um die Mittelachse 44 geschlossen umlaufenden Gebilde verbunden wird.

Eine derartige Verbindung im Bereich der Ringenden 262 und 264 kann dabei entweder eine stoffschlüssige oder eine formschlüssige Verbindung sein.

Besonders bevorzugt ist dabei eine formschlüssige Verbindung, die es erlaubt, zunächst zur Montage an dem Kugelkörper 100 den Trägerkörper 142 im Bereich der Ringenden 262 und 264 aufzutrennen, um diesen in die in der Nut 146 sitzende Trägerkörperführung 144, gebildet durch den C-förmigen Körper 152 und den Segmentkörper 172, einsetzen zu können und erst nach Einsetzen des Trägerkörpers 142 die Ringenden 262 und 264 miteinander zu verbinden.

Besonders vorteilhaft lässt sich ein derartiger Mitnahmering 140 aus dem Trägerkörper 142 und den Mitnahmeelementen 246 dann herstellen, wenn sowohl der Trägerkörper als auch die Mitnahmeelemente 246 aus einem Flachmaterial, beispielsweise aus einem federelastischen Metall, insbesondere einem Flachmaterialstreifen, ausgeschnitten und dann in die gewünschte Form gebogen werden.

Um die Drehbewegungen des Mitnahmerings 140 relativ zum feststehenden Kugelkörper 100 mittels der Magnetfeldsensoren 206 und 208 erfassen zu können, ist der Trägerkörper 142 mit einer Abtaststruktur 270 versehen, welche es der Sensoreinheit 202 erlaubt, die Relativbewegung des Trägerkörpers 142 um die Mittelachse 44 relativ zur feststehend im Kugelkörper 100 angeordneten Sensoreinheit 202 zu erfassen.

Die Abtaststruktur 270 ist als regelmäßige periodische Struktur ausgebildet und an die Art der Sensoren der Sensoreinheit 202 angepasst, dass die Sensoreinheit 202 in der Lage ist, die Relativbewegung der Abtaststruktur 270 mit einer Winkelauflösung von weniger als 1° zu dieser zu erfassen.

Im Fall der von dem Magnetfeld des Permanentmagneten 212 durchfluteten Magnetfeldsensoren 206 und 208 ist die Abtaststruktur 172 eine Struktur, bei welcher das Magnetfeld des Permanentmagneten 212 in unterschiedlichem Maße beeinflussende Bereiche 272 und 274 in Umlaufrichtung um die Mittelachse 44 einander abwechseln.

Ist beispielsweise das Material des Trägerkörpers 142 magnetisierbar, so lassen sich die weniger stark magnetisierbaren Bereich 274 durch Durchbrüche im Trägerkörper, insbesondere im Bereich zwischen dem Führungsschenkel 242 und der Führungsbasis 244, realisieren, während die stärker magnetisierbaren Bereiche 272 die zwischen den Durchbrüchen 274 liegenden Materialstege sind.

Vorzugsweise haben die stärker magnetisierbaren Bereich 272 und die weniger stark magnetisierbaren Bereiche 274 jeweils dieselbe Ausdehnung in der Umlaufrichtung 210 um die Mittelachse 44, so dass ein aufeinanderfolgendes Vorbeibewegen von stärker magnetisierbaren Bereichen 272 und weniger stark magnetisierbaren Bereichen 274 an den Magnetfeldsensoren 206 und 208 von diesen dadurch erfasst werden kann, dass sich das zu den stärker magnetisierbaren Bereichen 272 und zu den weniger stark magnetisierbaren Bereichen 274 erstreckende Magnetfeld des Permanentmagneten 212, welches die jeweiligen Magnetfeldsensoren 206 und 208 durchflutet, entsprechend der jeweils nahe der Magnetfeldsensoren 206, 208 stehenden stärker magnetisierbaren Bereiche 272 und der weniger stark magnetisierbaren Bereiche 274 verändert, so dass sich die Drehbewegung des Mitnahmerings 140 um die Mittelachse 44 relativ zu der Sensoreinheit 202 mit der erforderlichen Winkelauflösung erfassen lässt.

Insbesondere lässt sich eine derartige Erfassung der Drehbewegung dann vorteilhaft realisieren, wenn das Material des Trägerkörpers 142 ein magnetisierbares dauerhaft elastisches Metall ist.

Ferner ist es vorteilhaft, wenn das Material des Mitnahmerings zumindest korrosionsbeständig beschichtet oder aus korrosionsbeständigem Material hergestellt ist.

Derartige korrosionsbeständige Materialien sind beispielsweise:
- Martensitische korrosionsbeständige Stähle bekommen hartmagnetische Eigenschaften durch eine Wärmebehandlung und haben hohe Festigkeitswerte (härt- und vergütbar); Bsp. 1.4005, 1.4021, 1.4044, 1.4313
- Austenitisch-ferritische korrosionsbeständige Werkstoffe haben ebenfalls magnetische Eigenschaften bei höheren Festigkeiten; Bsp. 1.4462, 1.4362
- Austenitische korrosionsbeständige Stähle sind zunächst nicht magnetisierbar, die Stähle sind gut umformbar; bei einer Kaltumformung werden Anteile von Martensit gebildet (sog. Verformungsmartensit), was zu einem hier gewünschten ferromagnetischen Verhalten führt; ebenso wird die Festigkeit durch die Kaltverfestigung gesteigert, d.h. die Werkstoffe haben federnde Eigenschaften; Bsp. 1.4305, 1.4301, 1.4310, 1.4401

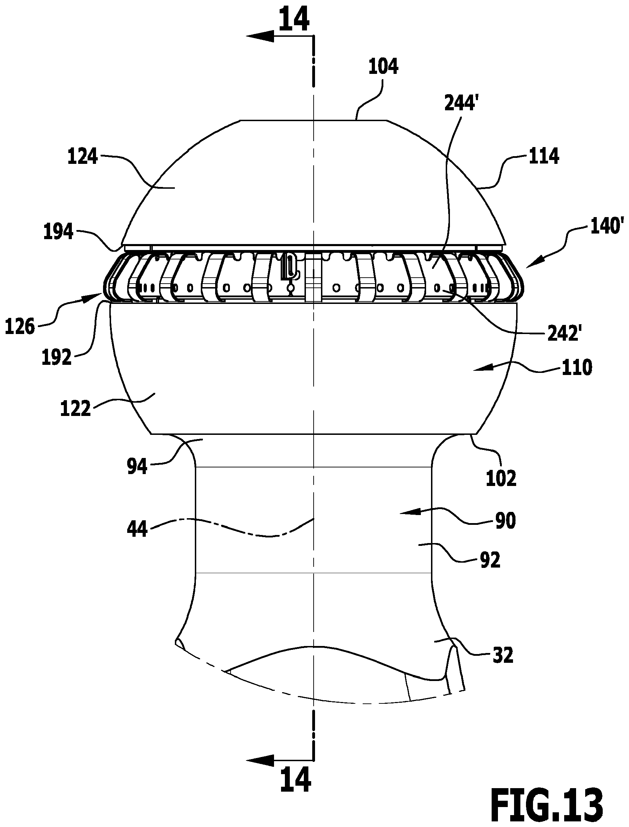

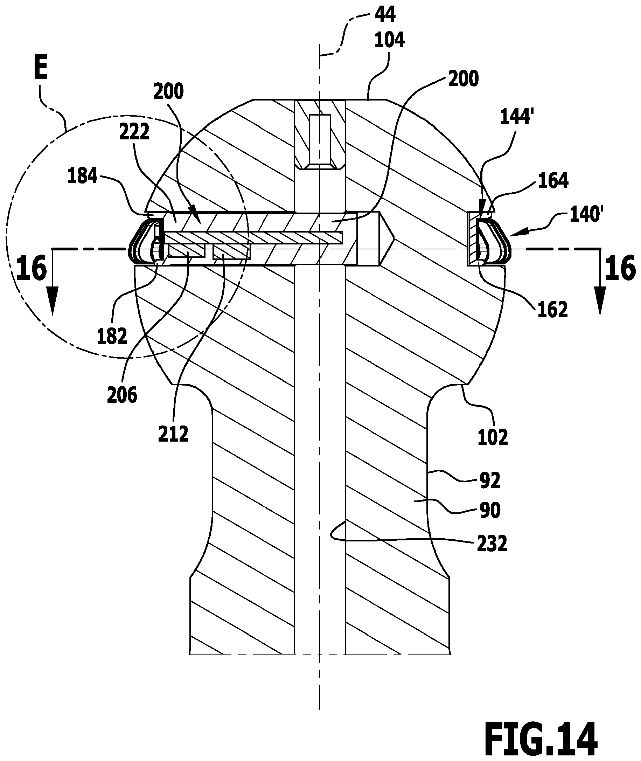

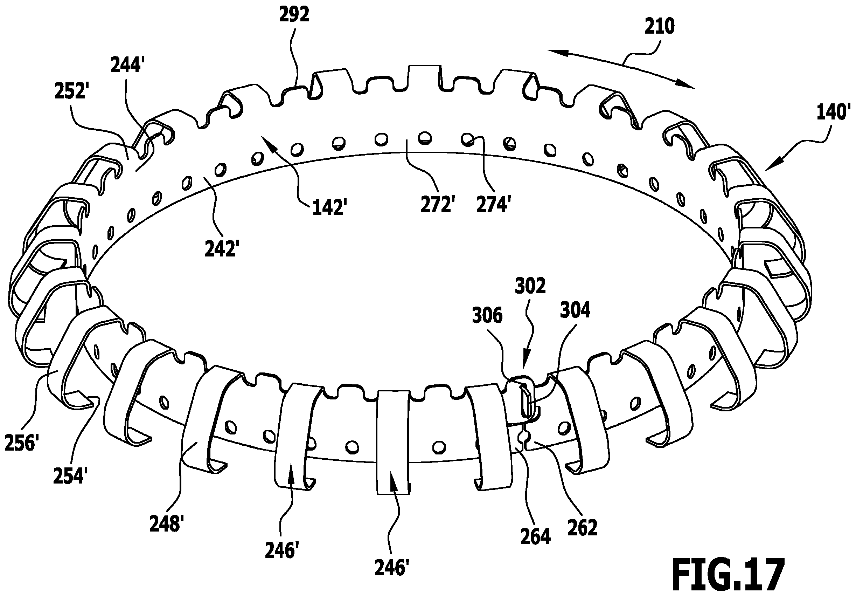

Bei einem zweiten Ausführungsbeispiel eines erfindungsgemäßen Mitnahmerings 140', dargestellt in den Fig. 13 bis 17, sind der Führungsschenkel 242' und die Trägerbasis 244' zu einem zylindrisch um die Mittelachse 44 umlaufenden Körper des Mitnahmerings 140' vereinigt, wobei die sich ausgehend von der Trägerbasis 244' erstreckenden Mitnahmeelemente 248' ebenfalls um die Mittelachse 44 umlaufend im Abstand voneinander angeordnet sind.

Zur exakten Führung der Einheit aus Führungsschenkel 242' und Trägerbasis 244' ist die Trägerbasis 244' noch mit Fortsätzen 292 versehen, die jeweils zwischen aufeinanderfolgenden Mitnahmeelementen 246' angeordnet sind und somit die Einheit aus der Trägerbasis 244' und der im Führungsschenkel 242' zwischen den Flanschsegmenten 182 und 184 sowie den entsprechenden Flanschkörpern 162 und 164 der Trägerkörperführung 144' gegen Bewegungen in Richtung der Mittelachse 44 führen.

Ferner erstrecken sich dann die als Zungen 248' ausgebildeten Mitnahmeelemente 246' ebenfalls ausgehend von der jeweiligen Zungenansatz 252' konvex gewölbt und radial zur Mittelachse 44 nach außen und dann weiter wie der radial nach innen bis zu dem freien Zungenende 254', welches wiederum in Richtung des Führungsschenkels 242' weist.

Damit liegen zumindest die konvex gewölbten und radial zur Mittelachse 44 federelastisch ausgebildeten Mitnahmebereiche 256' zumindest teilweise radial außerhalb der geometrischen Kugelfläche 114, um eine kraftschlüssige und/oder formschlüssige Verbindung beispielsweise mit der jeweiligen Zugkugelkupplung 82 einzugehen.

Bei diesem Ausführungsbeispiel sind dann die stärker magnetisierbaren Bereiche 272' und die weniger stark magnetisierbaren Bereiche 274' im Bereich des Führungsschenkels 242' angeordnet, und zwar nahe des Flanschsegments 182 und des Flanschkörpers 162.

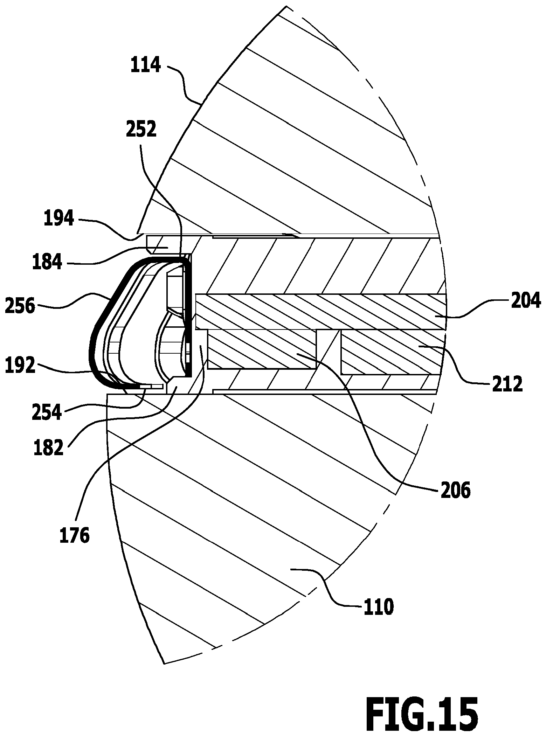

Entsprechend sind dann die zur Erfassung dieser Bereiche 272', 274' vorgesehenen Magnetfeldsensoren 206 und 208 angeordnet, wie in Fig. 15 dargestellt.

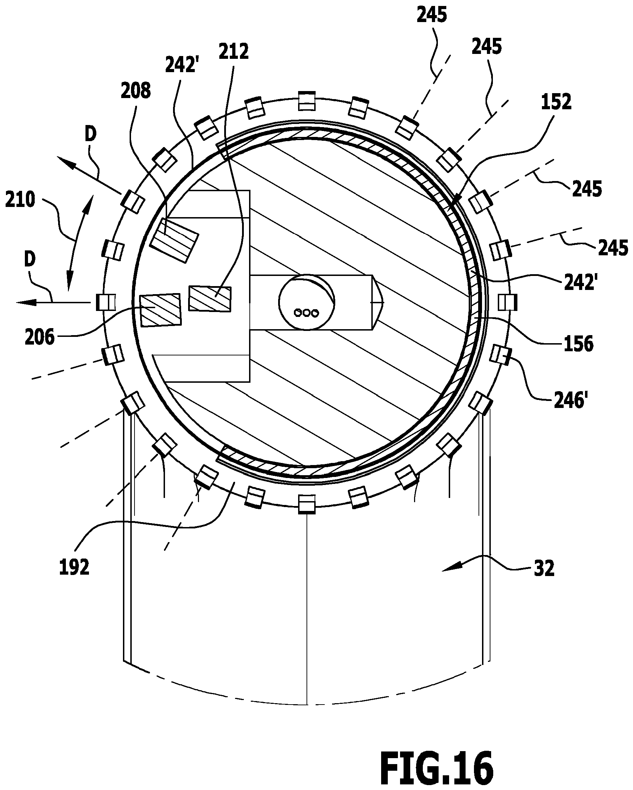

Ferner liegen die freien Zungenenden 254 ebenfalls innerhalb der Nut 146, und zwar vorzugsweise, wie in Fig. 16 dargestellt, nahe des Flanschsegments 182 beziehungsweise des Flanschkörpers 162, sie verlaufen jedoch berührungslos zu der jeweiligen Nutwand 192.

Ferner ist bei diesem Ausführungsbeispiel des Mitnahmerings 140' zur Verbindung der Ringenden 262 und 264 ein Verschluss 302 vorgesehen, welcher eine formschlüssige Verbindung zwischen den Ringenden 262 und 264 beispielsweise dadurch ermöglicht, dass an einem der Ringenden eine sich radial zur Mittelachse 44 erstreckende Lasche 304 vorgesehen ist, welche eine am Ringende 264 vorgesehene Öse 306 durchsetzt und somit eine formschlüssige Verbindung zwischen den Ringenden 262 und 264 schafft, die es ermöglicht, die Ringenden 262 und 264 zum Einsetzen des Mitnahmerings 140' mit seinem Trägerkörper 142' in die Trägerkörperführung 144 auseinander zu bewegen und nach Einsetzen des Trägerkörpers 142' in die Trägerkörperführung 144 formschlüssig zu verbinden.

Im Übrigen sind diejenigen Teile, die mit denen des voranstehenden Ausführungsbeispiels identisch sind, mit denselben Bezugszeichen versehen, so dass hinsichtlich der Beschreibung derselben vollinhaltlich auf die Ausführungen zu dem voranstehenden Ausführungsbeispiel Bezug genommen wird.

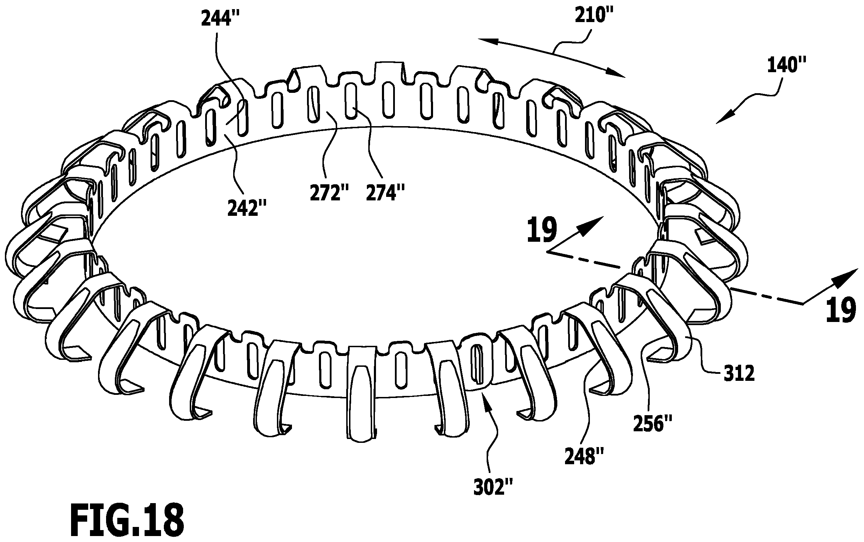

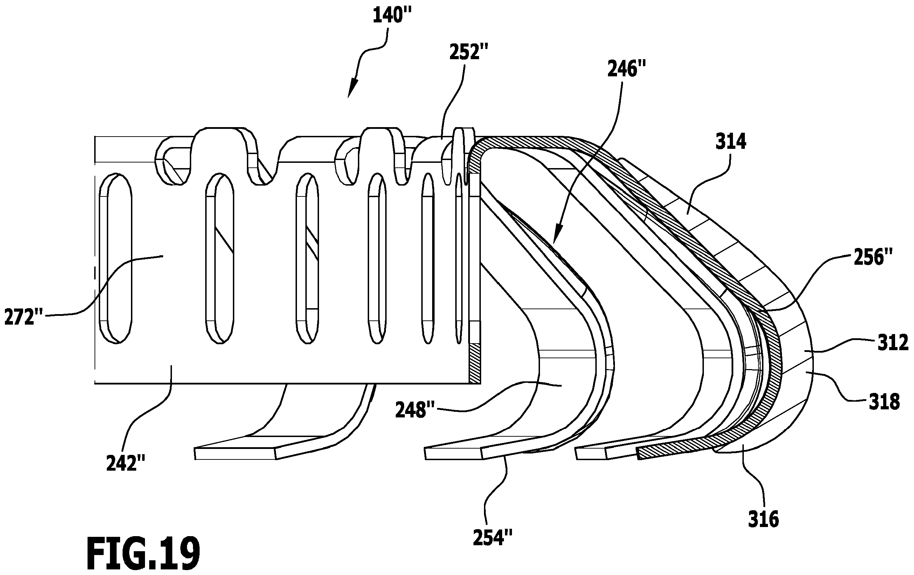

Ein drittes Ausführungsbeispiel eines Mitnahmerings 140"', dargestellt in Fig. 18 und 19 basiert im Prinzip auf dem zweiten Ausführungsbeispiel, mit dem Unterschied, dass sich im Bereich des Führungsschenkels 242" und der Führungsbasis 244" die weniger stark magnetisierbaren Bereiche 274" über die gesamte Höhe der Einheit aus Führungsschenkel 242" und Trägerbasis 244" erstrecken, so dass die Positionierung der Sensoreinheit 202 weniger kritisch ist.

Darüber hinaus sind die Zungen 248" in ihren konvexen Bereichen 256" mit Elastomerauflagen 312 versehen, die auf einer der Mittelachse 44 abgewandten Seite der Zungen 248" aufgetragen ist und somit dann, wenn die Zungen 248" aus Metall hergestellt sind, einerseits oberflächenschonend und andererseits kraftschlussverbessernd mit der entsprechenden Innenkontur beispielsweise der Zugkugelkupplung 82 in Wechselwirkung treten, so dass dadurch die Kopplung mit der Zugkugelkupplung 82 einerseits verbessert ist und andererseits im Bereich der Zugkugelkupplung 82 weniger Verschleiß auftritt und auch die Gefahr eines Verkantens oder Festkrallens in der Zugkugelkupplung 82 gemindert ist.

Vorzugsweise verläuft die Elastomerauflage 312 auf den konvexen Mitnahmebereichen 256 so, dass deren Auflagendicke in jeweils der Nut 146 nächstliegenden Endbereichen 314 und 316 geringer ist als in einem Bereich 318, der den größten radialen Abstand von der Mittelachse 44 aufweist.

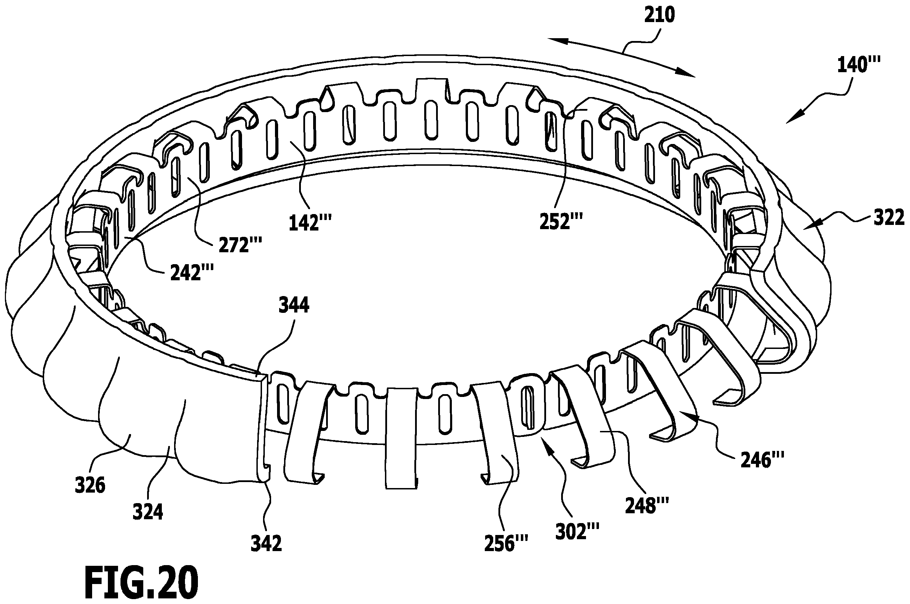

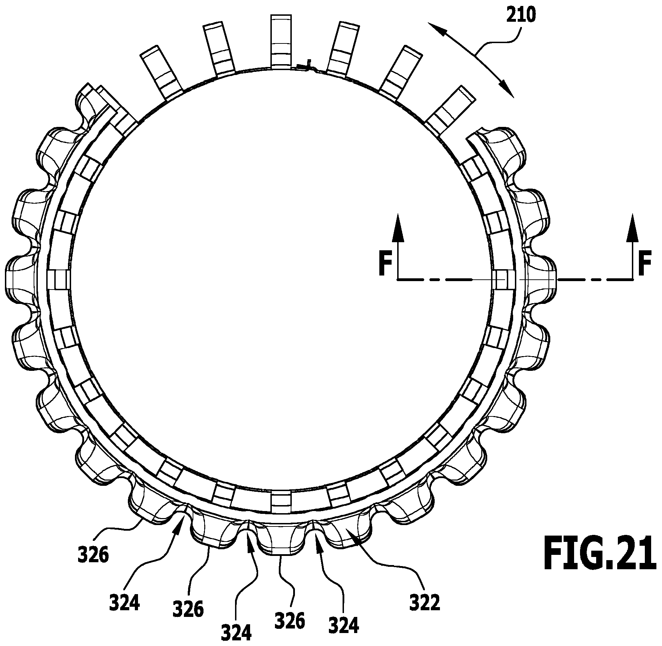

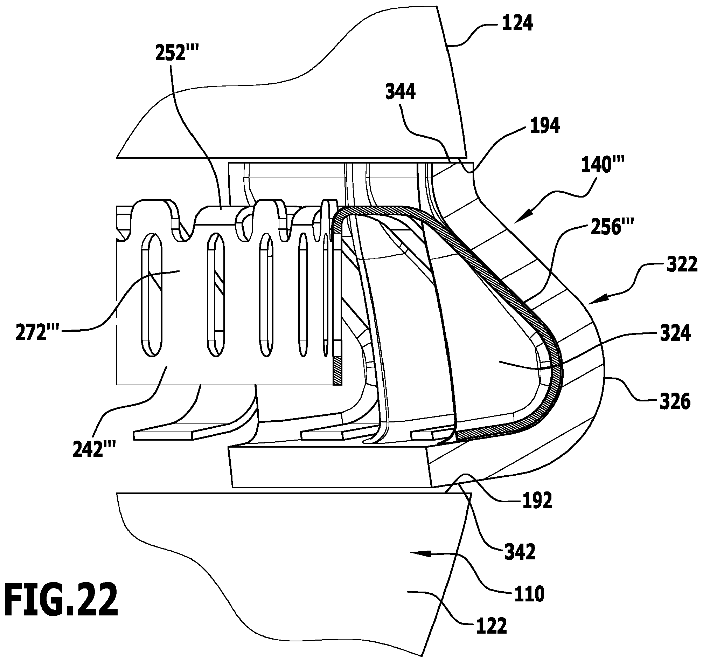

Bei einem vierten Ausführungsbeispiel des Mitnahmerings 140"', dargestellt in den Fig. 20 bis 22, basiert ebenfalls im Prinzip auf dem zweiten und dritten Ausführungsbeispiel, mit dem Unterschied, dass auf die Mitnahmeelemente 246''' und insbesondere die Zungen 248''' von einem Mantel 322 aus einem Elastomermaterial umschlossen der insbesondere auf den jeweiligen Mitnahmebereichen 256'" der einzelnen Zungen 248''' aufliegt und dabei sämtliche Mitnahmeelemente 246 des Mitnahmerings 140''' bezogen auf die Mittelachse 44 radial außenliegend umgibt.

Beispielsweise ist der Mantel 322 so geformt, dass er den Mitnahmebereich 256"' der jeweiligen Zunge 248''' jeweils zwischen den Mitnahmebereichen 256''' liegenden Einbuchtungen 324 aufnimmt, wobei die Einbuchtungen 324 sich von einer Außenkontur 326 des Mantels 322 im Bereich der Mitnahmebereiche 256''' faltenähnlich oder schlingenähnlich zwischen die Mitnahmebereiche 256''' hinein erstrecken.

Bei dem dargestellten Ausführungsbeispiel reichen die Einbuchtungen 324 jedoch nicht bis zu den Zungenansätzen 252''' sondern enden in einem radialen Abstand von diesen, so dass der Mantel 322 aufgrund seiner Elastizität der Bewegung der Mitnahmebereiche 256''' in radialer Richtung zur Mittelachse 44 folgen kann.

Insbesondere ist dabei bei einer Variante vorgesehen, dass der Mantel 322 auch jeweils an den Mitnahmebereichen 256'" der Mitnahmeelemente 246''' der Mitnahmeelemente 246'" anhaftet.

Somit geht der Mantel 322 bereits aufgrund seiner Formgebung eine drehfeste formschlüssige Verbindung mit der Gesamtheit der Mitnahmeelemente 246 ein und lässt sich beispielsweise aufgrund seiner Elastizität nach einem Schließen des Verschlusses 302''' auf die Mitnahmeelemente 246''' des Mitnahmerings 140''' aufziehen.

Der Mitnahmering 140''' ist somit hinsichtlich seiner Elastizität in radialer Richtung zur Mittelachse 44 durch die elastischen Eigenschaften der an dem Trägerkörper 142 angeordneten Mitnahmeelemente 246 geprägt, jedoch hinsichtlich seines Kraftschlusses mit der jeweiligen Innenkontur, beispielsweise der Innenkontur der Zugkugelkupplung 82, durch die Eigenschaften des Materials des Mantels 322.

Insbesondere ist der Mantel 322 so ausgebildet, dass er auf den konvexen Mitnahmebereichen 256''' der Mitnahmeelemente 246''' aufliegt und durch deren konvexe Form auch in Richtung parallel zur Mittelachse 44 fixiert ist.

Ferner erstreckt sich beispielsweise der Mantel 322 insbesondere in Richtung zur oder sogar bis zur Nutwand 192 und mit einem zweiten gegenüberliegenden Randbereich 344 in Richtung zur oder sogar bis zur Nutwand 194 und schützt somit die Nut 146 vor eindringendem Schmutz.

Im Übrigen sind diejenigen Elemente des vierten Ausführungsbeispiels, die mit denen der voranstehenden Ausführungsbeispiele identisch sind, mit denselben Bezugszeichen versehen, so dass hinsichtlich der Beschreibung derselben vollinhaltlich auf die Ausführungen zu den voranstehenden Ausführungsbeispielen Bezug genommen werden kann.

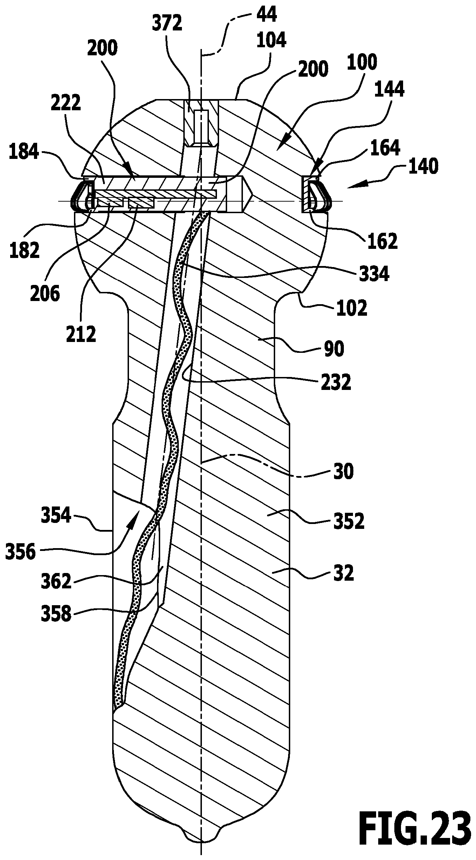

Bei einem fünften Ausführungsbeispiel einer erfindungsgemäßen Anhängekupplung, dargestellt in Fig. 23, verläuft der Leitungskanal 232 in diesem Fall geringfügig schräg zur Längsmittelebene 30, und zwar beginnend an der oberen Endfläche 104 durch den gesamten Kugelkörper 100 hindurch und auch durch den Kugelansatz 19 hindurch bis in einen den Kugelansatz tragenden Endbereich 352 des Kugelhalses 32, welcher mit einer sich ausgehend von einer Längsseite 354 des Endbereichs in diesen hineinerstreckenden Vertiefung 356 versehen ist.

Der Leitungskanal 232 mündet somit in einen Bodenbereich 358 der Vertiefung 356 und bildet in diesem eine Zugangsöffnung 362, über welche der Leitungskanal ausgehend von der Vertiefung 356 zugänglich ist.

Somit besteht die Möglichkeit, von dem Sensoraufnahmegehäuse 200 ausgehend eine elektrische Leitung 364 durch den Leitungskanal 252 bis in die Vertiefung 356 zu führen, im Bereich von welcher die elektrische Leitung 334 dann durch die Zugangsöffnung 362 in die Vertiefung 356 übertreten kann und dann entweder längs der Vertiefung 356 oder längs einer Außenseite des Kugelhalses weiter bis zu einer mit der Sensoreinheit 202 kommunizierenden Schaltung geführt werden.

Zur Vermeidung von Verschmutzungen des Leitungskanals 232 ist dieser in seinem an die obere Endfläche 104 angrenzenden Endbereich mit einem Stopfen 372 verschlossen.

Im Übrigen ist das fünfte Ausführungsbeispiel hinsichtlich derjenigen Teile, die mit dem der voranstehenden Ausführungsbeispiele identisch sind, mit denselben Bezugszeichen versehen, so dass bezüglich der Beschreibung derselben vollinhaltlich auf die Ausführungen zu den voranstehenden Ausführungsbeispielen Bezug genommen werden kann.

## Patentansprüche

1. Anhängekupplung (20) für Kraftfahrzeuge, umfassend
eine an einem Heckbereich (14) des Kraftfahrzeugs (10) angeordnete Trägereinheit (22),
einen Kugelhals (32), der an einem ersten Ende (34) eine Kupplungskugel (40) trägt, und der mit einem zweiten Ende an der Trägereinheit (22) gehalten ist,
eine um eine Mittelachse (44) der Kupplungskugel (40) umlaufende Nut (146), in der ein Mitnahmering (140) drehbar um die Mittelachse (44) geführt ist, und eine in der Kupplungskugel (40) angeordnete und Drehpositionen des Mitnahmerings (140) erfassende Sensoreinheit (202), wobei der Mitnahmering (140) mit einer Abtaststruktur (270) versehen ist, die von einer im Kugelkörper (100) angeordneten Sensoreinheit (202) abtastbar ist, wobei die Abtaststruktur (270) an dem Trägerkörper (142) angeordnet ist, **dadurch gekennzeichnet, dass** die Abtaststruktur (270) aufeinanderfolgende Bereiche (272, 274) aufweist, die ein Magnetfeld unterschiedlich stark beeinflussen, dass die aufeinanderfolgenden Bereiche (272, 274) unterschiedlich stark magnetisierbar sind, dass die Abtaststruktur (270) als alternierende, beispielsweise in der Umlaufrichtung (210) periodische, Struktur ausgebildet ist, die um die Mittelachse (44) in Umlaufrichtung aufeinanderfolgende Materialstege (272) und Materialsteglücken (274) aufweist, und dass die Sensoreinheit (202) zur Abtastung der Drehstellungen des Mitnahmerings (140) eine magnetisch vorgespannte Sensoranordnung aufweist.

2. Anhängekupplung nach Anspruch 1, **dadurch gekennzeichnet, dass** die Abtaststruktur (270) um die Mittelachse (44) umlaufend aufeinanderfolgende Stege (272) und Aussparungen (274) aufweist.

3. Anhängekupplung nach Anspruch 1 oder 2, **dadurch gekennzeichnet, dass** der Mitnahmering (140) einen Trägerkörper (142) aus Metall aufweist und dass an dem Trägerkörper (142) Mitnahmeelemente (246) gehalten sind, die über eine durch die Kupplungskugeloberfläche (110) definierte geometrische Kugelfläche (144) radial zur Mittelachse (44) nach außen überstehen.

4. Anhängekupplung nach Anspruch 3, **dadurch gekennzeichnet, dass** die Mitnahmeelemente (246) radial zur Mittelachse (44) elastisch bewegbare Mitnahmeflächen aufweisen, dass insbesondere die Mitnahmeelemente (246) ausgehend von dem Trägerkörper (142) sich mit einer in radialer Richtung zur Mittelachse (44) verlaufenden Komponente erstrecken.

5. Anhängekupplung nach Anspruch 3 oder 4, **dadurch gekennzeichnet, dass** die Mitnahmeelemente (246) Zungen (248) umfassen und dass die Zungen (248) einen mit dem Trägerkörper (142) verbundenen Zungenansatz (252) und ein Zungenende (254) aufweisen, zu welchem sich die Zungen (248) ausgehend von dem Zungenansatz (252) erstrecken, dass insbesondere die Zungen (248) so gebogen sind, dass das Zungenende (254) in der Nut (146) liegt, dass insbesondere der Zungenansatz (252) in der Nut (146) liegt, dass insbesondere die Zungen (248) C-förmig gebogen sind, dass insbesondere die Zungen (248) einen radial zur Mittelachse (44) konvex nach außen gewölbten Mitnahmebereich (256) aufweisen, der über die geometrische Kugelfläche (114) übersteht, dass insbesondere der konvex gewölbte Mitnahmebereich (256) radial zur Mittelachse (44) nach außen über die Nut (146) übersteht.

6. Anhängekupplung nach einem der Ansprüche 3 bis 5, **dadurch gekennzeichnet, dass** die Mitnahmeelemente (246) aus Metall ausgebildet sind.

7. Anhängekupplung nach einem der Ansprüche 3 bis 6, **dadurch gekennzeichnet, dass** die Mitnahmeelemente (246) mit einer Elastomerauflage (312) versehen sind.

8. Anhängekupplung nach einem der Ansprüche 3 bis 7, **dadurch gekennzeichnet, dass** an einer Außenseite der Mitnahmeelemente (246) ein Mantel (322) aus Elastomermaterial anliegt, dass insbesondere der Mantel (322) an der Gesamtheit der Mitnahmeelemente (246) anliegt, dass insbesondere der Mantel (322) ringähnlich ausgebildet ist, dass insbesondere der Mantel (322) die Nut (146) in der Kupplungskugel (40) verdeckt, insbesondere verschließt.

9. Anhängekupplung nach einem der Ansprüche 3 bis 8, **dadurch gekennzeichnet, dass** der Trägerkörper (142) als um die Mittelachse (44) umlaufender Ringkörper ausgebildet ist, dass insbesondere der Trägerkörper (142) in betriebsfähig montiertem Zustand als in einer Umlaufrichtung (210) um die Mittelachse (44) geschlossen umlaufender Ringkörper ausgebildet ist, dass insbesondere der Trägerkörper (142) als zwei Ringenden (262, 264) aufweisender, durch einen Verschluss (302) in der Umlaufrichtung schließbarer Ringkörper ausgebildet ist.

10. Anhängekupplung nach einem der Ansprüche 3 bis 9, **dadurch gekennzeichnet, dass** die Mitnahmeelemente (246) an den Trägerkörper (142) angeformt sind, dass insbesondere die Mitnahmeelemente (246) einstückig an den Trägerkörper (142) angeformt sind.

11. Anhängekupplung nach einem der Ansprüche 3 bis 10, **dadurch gekennzeichnet, dass** der Trägerkörper (142) aus Flachmaterial ausgebildet ist, dass insbesondere der Trägerkörper (142) aus Flachmaterial so geformt ist, dass dieser in einer um die Mittelachse (44) herumverlaufenden Zylinderfläche verläuft.

12. Anhängekupplung nach einem der voranstehenden Ansprüche, **dadurch gekennzeichnet, dass** der Trägerkörper (142) durch eine Trägerkörperführung (144) geführt ist, die ihrerseits in der Nut (146) des Kugelkörpers (100) angeordnet ist, dass insbesondere die Trägerkörperführung (144) den Trägerkörper (142) berührungsfrei zum Kugelkörper (100) führt, dass insbesondere die Trägerkörperführung (144) den Trägerkörper (142) berührungsfrei zu Wandflächen der Nut (146) führt, dass insbesondere die Trägerkörperführung (144) eine Aufnahme (166) für den Trägerkörper (142) aufweist.

## Claims

1. A trailer coupling (20) for motor vehicles, comprising a carrier unit (22) arranged on a tail region (14) of the motor vehicle (10),
a ball neck (32), which carries at a first end (34) a coupling ball (40), and which at a second end is held on the carrier unit (22),
a groove (146) which surrounds a central axis (44) of the coupling ball (40) and in which an entrainment ring (140) is rotatably guided about the central axis (44), and a sensor unit (202) which is arranged in the coupling ball (40) and which detects rotary positions of the entrainment ring (140), wherein
the entrainment ring (140) is provided with a sensing structure (270), which can be sensed by a sensor unit (202) arranged in the ball body (100), wherein
the sensing structure (270) is arranged on the carrier body (142), **characterized in that** the sensing structure (270) comprises successive regions (272, 274), which influence a magnetic field with differing strengths, **in that** the successive regions (272, 274) are magnetizable with different strengths, **in that** the sensing structure (270) is constructed as an alternating structure, for example periodic in the peripheral direction (210), the structure comprising material webs (272) and material web gaps (274) succeeding each other about the central axis (44) in the peripheral direction, and **in that** the sensor unit (202) comprises a magnetically biased sensor arrangement for sensing the rotary positions of the entrainment ring (140).

2. A trailer coupling according to claim 1, **characterized in that** the sensing structure (270) comprises successive webs (272) and gaps (274) surrounding the central axis (44).

3. A trailer coupling according to claim 1 or 2, **characterized in that** the entrainment ring (140) comprises a carrier body (142) of metal and **in that** there are held on the carrier body (142) entrainment elements (246), which project radially outwardly of the central axis (44) beyond a geometric ball surface (144) defined by the coupling ball outer face (110).

4. A trailer coupling according to claim 3, **characterized in that** the entrainment elements (246) have entrainment faces which are elastically movable radially of the central axis (44), **in that** in particular the entrainment elements (246) extend from the carrier body (142) with a component running in a radial direction to the central axis (44).

5. A trailer coupling according to claim 3 or 4, **characterized in that** the entrainment elements (246) comprise tongues (248) and **in that** the tongues (248) have a tongue formation (252) connected to the carrier body (142) and have a tongue end (254), to which the tongues (248) extend starting from the tongue formation (252), **in that** in particular the tongues (248) are bent such that the tongue end (254) lies in the groove (146), **in that** in particular the tongue formation (252) lies in the groove (146), **in that** in particular the tongues (248) are bent into a C-shape, **in that** in particular the tongues (248) have an entrainment region (256) which curves convexly outwardly radial to the central axis (44), and which projects beyond the geometrical ball surface (114), **in that** in particular the convexly curved entrainment region (256) projects outwardly radial to the central axis (44), beyond the groove (146).

6. A trailer coupling according to one of claims 3 to 5, **characterized in that** the entrainment elements (246) are made of metal.

7. A trailer coupling according to one of claims 3 to 6, **characterized in that** the entrainment elements (246) are provided with an elastomer overlay (312).

8. A trailer coupling according to one of claims 3 to 7, **characterized in that** a jacket (322) of elastomer material lies on an outer side of the entrainment elements (246), **in that** in particular the jacket (322) lies against the entirety of the entrainment elements (246), **in that** in particular the jacket (322) is formed ring-shaped, **in that** in particular the jacket (322) covers the groove (146) in the coupling ball (40), in particular closes the groove.

9. A trailer coupling according to one of claims 3 to 8, **characterized in that** the carrier body (142) is formed as an annular body surrounding the central axis (44), in particular **in that** the carrier body (142) in the state assembled for operation is formed as an annular body surrounding the central axis (44) in closed manner in a peripheral direction (210), in particular **in that** the carrier body (142) is formed as an annular body closable in the peripheral direction having two ring ends (262, 264) and closable by a closure (302) in the peripheral direction.

10. A trailer coupling according to one of claims 3 to 9, **characterized in that** the entrainment elements (246) are formed on the carrier body (142), in particular **in that** the entrainment elements (246) are formed in one piece with the carrier body (142).

11. A trailer coupling according to one of claims 3 to 10, **characterized in that** the carrier body (142) is made of planar material, **in that** in particular the carrier body (142) is so formed of planar material that it runs in a cylindrical surface running around the central axis (44).

12. A trailer coupling according to one of the preceding claims, **characterized in that** the carrier body (142) is guided by a carrier body guide (144), which for its part is arranged in the groove (146) of the ball body (100), **in that** in particular the carrier body guide (144) guides the carrier body (142) without contact to the ball body (100), **in that** in particular the carrier body guide (144) guides the carrier body (142) without contact to wall surfaces of the groove (146), **in that** in particular the carrier body guide (144) has a receptacle (166) for the carrier body (142).

## Revendications

1. Attelage de remorque (20) pour véhicules automobiles, comprenant
une unité de support (22) disposée sur une zone arrière (14) du véhicule automobile (10),
un col porte-boule (32), qui porte une boule d'attelage (40) à une première extrémité (34), et qui est retenu sur l'unité de support (22) avec une deuxième extrémité,
une rainure (146) faisant le tour d'un axe médian (44) de la boule d'attelage (40), dans laquelle une bague d'entraînement (140) est guidée de manière à pouvoir tourner autour de l'axe médian (44), et une unité capteur (202) disposée dans la boule d'attelage (40) et détectant des positions de rotation de la bague d'entraînement (140), dans lequel
la bague d'entraînement (140) est pourvue d'une structure à balayer (270), qui peut être balayée par une unité capteur (202) disposée dans le corps de boule (100), dans lequel
la structure à balayer (270) est disposée sur le corps de support (142), **caractérisé en ce que**
la structure à balayer (270) présente des zones (272, 274) successives, qui influencent un champ magnétique de façon différemment forte, que les zones (272, 274) successives peuvent être magnétisées de façon différemment forte, que la structure à balayer (270) est réalisée en tant que structure alternée, par exemple périodique dans la direction périphérique (210), qui présente des nervures de matériau (272) et des intervalles de nervures de matériau (274) successives dans la direction périphérique autour de l'axe médian (44), et que l'unité capteur (202) présente pour le balayage des positions de rotation de la bague d'entraînement (140) un ensemble de capteur précontraint de façon magnétique.

2. Attelage de remorque selon la revendication 1, **caractérisé en ce que** la structure à balayer (270) présente des nervures (272) et évidements (274) successifs de manière périphérique autour de l'axe médian (44).

3. Attelage de remorque selon la revendication 1 ou 2, **caractérisé en ce que** la bague d'entraînement (140) présente un corps de support (142) en métal et que des éléments d'entraînement (246) sont retenus sur le corps de support (142), qui font saillie vers l'extérieur d'une surface de boule géométrique (144) définie par la surface de boule d'attelage (110) radialement par rapport à l'axe médian (44).

4. Attelage de remorque selon la revendication 3, **caractérisé en ce que** les éléments d'entraînement (246) présentent des surfaces d'entraînement mobiles élastiquement radialement par rapport à l'axe médian (44), qu'en particulier les éléments d'entraînement (246) s'étendent à partir du corps de support (142) avec une composante s'étendant dans la direction radiale par rapport à l'axe médian (44).

5. Attelage de remorque selon la revendication 3 ou 4, **caractérisé en ce que** les éléments d'entraînement (246) comprennent des languettes (248) et que les languettes (248) présentent un début de languette (252) relié au corps de support (142) et une fin de languette (254), vers laquelle les languettes (248) s'étendent à partir du début de languette (252), qu'en particulier les languettes (248) sont courbées de sorte que la fin de languette (254) se situe dans la rainure (146), qu'en particulier le début de languette (252) se situe dans la rainure (146), qu'en particulier les languettes (248) sont courbées en forme de C, qu'en particulier les languettes (248) présentent une zone d'entraînement (256) bombée vers l'extérieur de manière convexe radialement par rapport à l'axe médian (44), qui fait saillie de la surface de boule géométrique (114), qu'en particulier la zone d'entraînement (256) bombée de manière convexe fait saillie de la rainure (146) vers l'extérieur radialement par rapport à l'axe médian (44).

6. Attelage de remorque selon l'une quelconque des revendications 3 à 5, **caractérisé en ce que** les éléments d'entraînement (246) sont réalisés à partir de métal.

7. Attelage de remorque selon l'une quelconque des revendications 3 à 6, **caractérisé en ce que** les éléments d'entraînement (246) sont pourvus d'un revêtement élastomère (312).

8. Attelage de remorque selon l'une quelconque des revendications 3 à 7, **caractérisé en ce qu'**une enveloppe (322) composée de matériau élastomère s'applique sur une face extérieure des éléments d'entraînement (246), qu'en particulier l'enveloppe (322) s'applique sur la totalité des éléments d'entraînement (246), qu'en particulier l'enveloppe (322) est réalisée à la façon d'une bague, qu'en particulier l'enveloppe (322) couvre, en particulier ferme la rainure (146) dans la boule d'attelage (40).

9. Attelage de remorque selon l'une quelconque des revendications 3 à 8, **caractérisé en ce que** le corps de support (142) est réalisé en tant que corps annulaire faisant le tour de l'axe médian (44), qu'en particulier le corps de support (142) est réalisé dans l'état monté prêt à fonctionner en tant que corps de bague faisant le tour de l'axe médian (44) de manière fermée dans une direction périphérique (210), qu'en particulier le corps de support (142) est réalisé en tant que corps de bague présentant deux extrémités de bague (262, 264), pouvant être fermé dans la direction périphérique par une fermeture (302).

10. Attelage de remorque selon l'une quelconque des revendications 3 à 9, **caractérisé en ce que** les éléments d'entraînement (246) sont formés sur le corps de support (142), qu'en particulier les éléments d'entraînement (246) sont formés d'une seule pièce sur le corps de support (142).

11. Attelage de remorque selon l'une quelconque des revendications 3 à 10, **caractérisé en ce que** le corps de support (142) est réalisé à partir d'un matériau plat, qu'en particulier le corps de support (142) est formé à partir d'un matériau plat, de sorte que celui-ci s'étend dans une surface cylindrique s'étendant autour de l'axe médian (44).

12. Attelage de remorque selon l'une quelconque des revendications précédentes, **caractérisé en ce que** le corps de support (142) est guidé par un guidage de corps de support (144), qui est disposé de son côté dans la rainure (146) du corps de boule (100), qu'en particulier le guidage de corps de support (144) guide le corps de support (142) sans contact vers le corps de boule (100), qu'en particulier le guidage de corps de support (144) guide le corps de support (142) sans contact vers les surfaces de paroi de la rainure (146), qu'en particulier le guidage de corps de support (144) présente un logement (166) pour le corps de support (142).
